# EUROPÄISCHE PATENTSCHRIFT

(11) **EP 0 988 921 B1**
(45) Veröffentlichungstag und Bekanntmachung des Hinweises auf die Patenterteilung: **01.10.2003**
(21) Anmeldenummer: 99117571.2
(22) Anmeldetag: 06.09.1999
(51) Int. Cl.: B23P 19/06, B25B 23/14

(54) **Werkzeugmaschine mit Drehmomentkupplung**
Machine-tool with torque clutch
Machine-outil avec embrayage de couple

(30) Priorität: 22.09.1998 DE 19843452
(43) Veröffentlichungstag der Anmeldung: 29.03.2000
(73) Patentinhaber: Otto Bihler Handels-Beteiligungs-GmbH, 87642 Halblech (DE)
(72) Erfinder: Köpf, Johann, 87642 Halblech (DE)
(74) Vertreter: Tiesmeyer, Johannes, Dr.

(56) Entgegenhaltungen:
- DE-A- 19 709 495
- GB-A- 1 462 759
- GB-A- 2 068 061
- US-A- 3 693 381
- US-A- 4 287 923
- US-A- 4 513 827

## Beschreibung

Die Erfindung betrifft eine Werkzeugmaschine entsprechend dem Oberbegriff des Anspruchs 1, wie z.B. aus der US-A-3 693 381 bekannt.

Mit Drehmomentkupplungen ausgestattete Werkzeugmaschinen sind im Stand der Technik allgemein bekannt. Die DE 197 09 495 A1 beschreibt einen Hochgeschwindigkeits-Verschraubungsautomaten, der pro Minute einhundert oder mehr Arbeitszyklen ausführen kann und bei welchem das Werkzeug, beispielsweise ein Schrauberbit für Kreuzschlitzschrauben, entsprechend mit Drehzahlen in der Größenordnung von etwa 3600 U/min bis zu etwa 6000 U/min angetrieben werden muß, wobei das Werkzeug überdies in jedem Arbeitszyklus zu Beginn der Verschraubung auf diese Drehzahl beschleunigt und am Ende wieder abgebremst werden muß. Im Antriebsstrang eines derartigen Hochgeschwindigkeits-Verschraubungsautomaten eine Drehmomentkupplung vorzusehen, um die Schraubbolzen mit einem vorbestimmten Drehmoment anziehen zu können, stellt die mit dieser Aufgabenstellung betrauten Ingenieure vor große Probleme. Und dies insbesondere dann, wenn ein Anzugsdrehmoment von weniger als 1 Nm erwünscht ist, beispielsweise ein Anzugsdrehmoment von 0,1 Nm bis 0,6 Nm, wie es bei der Montage von Elektronikgeräten gefordert wird. Zwar sind auf dem Markt Drehmomentkupplungen mit Auslösedrehmomenten von 0,6 Nm erhältlich. Versuche im Unternehmen des Anmelders haben jedoch ergeben, daß diese Drehmomentkupplungen den an sie gestellten Anforderungen nicht genügen, insbesondere bereits bei der Beschleunigung des Werkzeugs auf die Arbeitsdrehzahl auslösen, d.h. die antriebsseitige Kupplungshälfte und die abtriebsseitige Kupplungshälfte voneinander trennen.

Es ist daher Aufgabe der vorliegenden Erfindung, eine Werkzeugmaschine der eingangs genannten Art anzugeben, welche auch im Hochgeschwindigkeits-Betrieb und bei Einsatz einer Drehmomentkupplung mit niedrigem Auslöse-Drehmoment ordnungsgemäß arbeitet.

Diese Aufgabe wird durch eine Werkzeugmaschine entsprechend dem Anspruch 1. gelöst. Hierdurch wird erreicht, daß das Gesamtträgheitsmoment der Abtriebsseite der Drehmomentkupplung und der gegebenenfalls mit dieser verbundenen Teile des Antriebsstranges einschließlich des Werkzeugs einen so niedrigen Wert aufweist, daß das Auslöse-Drehmoment der Drehmomentkupplung auch bei hoher Beschleunigung des Werkzeugs nicht durch das Trägheits-Drehmoment der abtriebsseitig der Drehmomentkupplung vorhandenen Teile überschritten wird. Dabei kann das Gesamtträgheitsmoment der Abtriebsseite der Drehmomentkupplung und gegebenenfalls der mit dieser verbundenen Teile einschließlich des Werkzeugs beispielsweise weniger als 250 g·cm², vorzugsweise weniger als 25 g·cm², noch bevorzugter weniger als 2,5 g·cm², betragen.

Um eine ordnungsgemäße Funktion der Drehmomentkupplung in Hochgeschwindigkeits-Werkzeugmaschinen zuverlässig sicherstellen zu können, wird vorgeschlagen, daß die Drehmomentkupplung im Antriebsstrang so nahe am Werkzeug angeordnet ist, daß bei Beschleunigung des Werkzeugs aus dem Stillstand auf eine Drehzahl von mindestens 3600 U/min, vorzugsweise mindestens 4800 U/min, innerhalb höchstens einer vollen Umdrehung, vorzugsweise innerhalb höchstens einer halben Umdrehung, eine auf ein Auslöse-Drehmoment von 0,5 Nm ausgelegte Drehmomentkupplung aufgrund des Gesamtträgheitsmoments ihrer Abtriebsseite und der gegebenenfalls mit dieser verbundenen Teile einschließlich des Werkzeugs nicht auslöst.

Gemäß der Erfindung greift die Abtriebsseite der Drehmomentkupplung unmittelbar an dem Werkzeug an. Das die Drehmomentkupplung während der Beschleunigungsphase belastende Trägheits-Drehmoment weist in diesem Falle einen minimalen Wert auf, da es einzig und allein vom Werkzeug hervorgerufen wird. Führt man sich vor Augen, daß ein üblicher Schrauberbit beispielsweise ein Gewicht von etwa 20 g und einen Durchmesser von weniger als 1 cm aufweist, so sieht man leicht ein, daß diese Ausführungsform auch die Möglichkeit einer weiteren Erhöhung der Anzahl der pro Zeiteinheit durchgeführten Arbeitszyklen bietet.

Im Unterschied zu herkömmlichen Drehmomentkupplungen, deren Hauptfunktionselemente zwei miteinander in einer Art "Verzahnungseingriff" stehende und federnd gegeneinander vorgespannte Keilflächen sind, kann die erfindungsgemäße Drehmomentkupplung wenigstens ein Drehmomentübertragungselement umfassen sowie eine Federanordnung, welche mit dem wenigstens einen Drehmomentübertragungselement während der Drehmomentübertragung auf das Werkzeug in Wirkverbindung steht. Infolge des wenigstens einen Drehmomentübertragungselements hat der Konstrukteur eine höhere Flexibilität hinsichtlich der räumlichen Relativanordnung von Antriebsseite und Abtriebsseite der Drehmomentkupplung in dem in der Nähe des Werkzeugs sehr begrenzt zur Verfügung stehenden Bauraum.

Die weitere Ausgestaltungsmöglichkeit, gemäß der die Federanordnung mit dem wenigstens einen Drehmomentübertragungselement erst nach einer vorbestimmten Relativverdrehung von Antriebsseite und Abtriebsseite der Drehmomentkupplung in Wirkverbindung tritt, ist insbesondere bei Verschraubungsautomaten von Vorteil. Ist nämlich der Angriffsschlitz des Schraubbolzens relativ zur Klinge des Schrauberbits nur um wenige Grad verdreht, so ermöglicht es das Winkelspiel der Drehmomentkupplung, daß sich der Schrauberbit bei einer axialen Annäherung an den Schraubbolzen unter der Wirkung der üblicherweise vorhandenen Einweisungsschrägen an Klinge und Angriffsschlitz selbsttätig leicht verdreht, so daß seine Klinge ordnungsgemäß in den Angriffsschlitz des Schraubbolzens eingeführt werden kann.

Um zu Beginn der Beschleunigungsphase ein allmähliches und somit materialschonendes Einsetzen der Mitnahme der abtriebsseitig der Drehmomentkupplung angeordneten Teile des Antriebsstranges gewährleisten zu können, wird vorgeschlagen, daß das von der Antriebsseite der Drehmomentkupplung auf deren Abtriebsseite übertragbare Drehmoment bei einer Relativverdrehung der beiden Seiten zumindest in einem vorbestimmten Relativverdrehungs-Winkelbereich mit zunehmendem Relativverdrehungs-Winkel ansteigt. Dies kann beispielsweise dadurch erreicht werden, daß die Federanordnung eine mit zunehmendem Relativverdrehungs-Winkel ansteigende Federcharakteristik aufweist.

Die zum Zwecke der Drehmomentübertragung erforderliche Auslenkung des wenigstens einen Drehmomentübertragungselements kann beispielsweise dadurch erhalten werden, daß das wenigstens eine Drehmomentübertragungselement mit einer Angriffsfläche zusammenwirkt, welche mit ansteigendem Relativverdrehungs-Winkel zwischen Antriebsseite und Abtriebsseite der Drehmomentkupplung das Drehmomentübertragungselement zunehmend auf die Federanordnung zu drängt.

Um zum einen ein möglichst sanftes und materialschonendes Auslösen der Drehmomentkupplung bereitstellen zu können und zum anderen eine ratschende Relativbewegung der miteinander zusammenwirkenden Teile der Drehmomentkupplung unmittelbar nach deren Auslösen verhindern zu können, wird vorgeschlagen, daß sich eine mit einer Gegenangriffsfläche odereinem Drehmomentübertragungselementzusammenwirkende Angriffsfläche über einen Relativverdrehungs-Winkelbereich von wenigstens 20°, vorzugsweise wenigstens 30°, erstreckt. Bei herkömmlichen Drehmomentkupplungen mit zwei in axialer Richtung zusammenwirkenden und gegeneinander federvorgespannten Keilflächen weisen die einzelnen Keilabschnitte nur eine geringe Winkelerstreckung auf, daß es in der Praxis nicht möglich ist, den Antrieb so schnell abzubremsen, daß eine ratschende Relativbewegung der beiden Keilflächen verhindert werden kann. Der sich aus dieser ratschenden Relativbewegung ergebende erhöhte Verschleiß insbesondere der Gipfellinien der Keilabschnitte kann durch die erfindungsgemäße Maßnahme in einfacher Weise verhindert werden, da der Antrieb nach dem Auslösen der Drehmomentkupplung abgebremst werden kann, bevor das Ende des einem "erneuten" Auslösen entsprechenden Relativverdrehungs-Winkelbereichs erreicht ist. Für diese erfindungsgemäße Maßnahme wird unabhängiger Schutz angestrebt.

Die Angriffsfläche kann beispielsweise an dem Werkzeug oder einem mit diesem verbundenen Teil ausgebildet sein.

In einer besonders verschleißarmen Ausführungsform der erfindungsgemäßen Drehmomentkupplung kann das wenigstens eine Drehmomentübertragungselement von einem Wälzkörper gebildet sein. Durch die Wälzbewegung des Drehmomentübertragungselements auf der Angriffsfläche wird eine schleifende und somit Verschleiß verursachende Gleitbewegung des Drehmomentübertragungselements relativ zur Angriffsfläche vermieden. Darüber hinaus ist infolge der Wälzbewegung auch die Gipfellinie der Angriffsfläche, welche bei herkömmlichen Drehmomentkupplungen besonders hoher Verformungsbeanspruchung ausgesetzt ist, geringerem Verschleiß ausgesetzt. Auch für diesen Gedanken wird unabhängiger Schutz angestrebt.

Insbesondere bei Verschraubungseinrichtungen bzw. Verschraubungsautomaten ist es vorteilhaft, wenn sich das wenigstens eine Drehmomentübertragungselement bei einer Relativverdrehung von Antriebsseite und Abtriebsseite der Drehmomentkupplung im wesentlichen in radialer Richtung bewegt. Durch diese Maßnahme kann nämlich ein vom Auslösen der Drehmomentkupplung hervorgerufener störender Einfluß sowohl in Umfangsrichtung als auch in Axialrichtung vermieden werden. Hierdurch wird zum einen das gewünschte Anzugsdrehmoment des Schraubbolzens nicht durch einen in Umfangsrichtung wirkenden und vom Auslösen der Drehmomentkupplung hervorgerufenen Schlag verfälscht. Zum anderen wird die Schraubverbindung nicht durch einen in Achsrichtung wirkenden Schlag belastet.

Aber auch bei anderen Werkzeugmaschinen ist diese Maßnahme von Vorteil, insbesondere dann, wenn ein in radialer Richtung begrenzter Bauraum den Flächeninhalt der herkömmlichen zur Drehachse orthogonalen Keilflächen beschränkt, so daß ein gewünschtes Auslösedrehmoment nur durch eine starke Federvorspannung und somit einen entsprechend hohen Anpreßdruck erreicht werden kann. Bei Einsatz des vorstehend diskutierten erfindungsgemäßen Gedankens kann der Anpreßdruck unabhängig von dem gewünschten Auslösedrehmoment durch entsprechend lange axiale Bemessung der Drehmomentkupplung auf einen niedrigen Wert eingestellt werden. Auch für diesen Gedanken wird unabhängiger Schutz angestrebt.

In Weiterbildung der Erfindung wird vorgeschlagen, daß das Werkzeug in einer kreiszylindrischen Ausnehmung des Werkzeughalters lösbar aufgenommen ist. Im Vergleich mit herkömmlichen Werkzeugmaschinen ohne Drehmomentkupplung, bei welchen die Werkzeugaufnahme einen polygonalen Querschnitt aufweist, vereinfacht dies die Fertigung des Werkzeughalters.

Ferner wird vorgeschlagen, daß das wenigstens eine Drehmomentübertragungselement in einer Ausnehmung des Werkzeughalters aufgenommen ist. Diese Ausnehmung kann in der ohnehin erforderlichen Begrenzungswandung der Werkzeugaufnahme vorgesehen sein, so daß für die Unterbringung des Drehmomentübertragungselements kein zusätzlicher Bauraum erforderlich ist. Die Ausnehmung weist vorzugsweise wenigstens einen inneren Anschlag für das Drehmomentübertragungselement auf, so daß es bei einem Werkzeugwechsel nicht nach innen in die Werkzeugaufnahme fallen kann.

Um eine in Umfangsrichtung möglichst gleichmäßige Drehmomentübertragung zwischen der Antriebsseite und der Abtriebsseite der Drehmomentkupplung erzielen zu können, wird vorgeschlagen, daß wenigstens drei Drehmomentübertragungselemente gleichmäßig auf dem Umfang des Werkzeughalters verteilt angeordnet sind. Bei unmittelbarer Einwirkung auf die hexagonale Außenfläche eines Schraubwerkzeugs ist es bevorzugt, drei im Winkelabstand von jeweils 120° angeordnete Drehmomentübertragungselemente vorzusehen.

Die Federanordnung kann beispielsweise eine Spannhülse umfassen, welche im unverformten Zustand einen vorzugsweise im wesentlichen kreiszylindrischen Querschnitt aufweist. Wirkt eine Mehrzahl von in Ausnehmungen der Werkzeugaufnahme angeordneten Drehmomentübertragungselementen unmittelbar auf das Werkzeug ein, so kann die Spannhülse außen auf die Werkzeugaufnahme aufgeschoben sein, was nur wenig Bauraum erfordert.

Grundsätzlich ist es zwar möglich, eine ungeschlitzte Spannhülse einzusetzen. In diesem Fall wird die Spannhülse jedoch zwischen zwei benachbarten Drehmomentübertragungselementen einer relativ starken Biegeverformung unterworfen, so daß es schwierig ist, die gewünschten niedrigen Auslösedrehmomente mit Spannhülsen zu erzielen, deren Wandstärken eine ausreichende Sicherheit vor plastischer Verformung der Spannhülse gewährleisten. Erfindungsgemäß wird daher vorgeschlagen, daß die Spannhülse einen zwischen den beiden axialen Hülsenenden durchgehend verlaufenden Schlitz aufweist. Hierdurch tragen alle Drehmomentübertragungselement zu einer sich über den gesamten Umfang der Spannhülse verteilenden Biegeverformung bei, so daß die einzelnen Umfangsabschnitte geringerer Beanspruchung ausgesetzt sind. Dies führt im Vergleich mit einer ungeschlitzten Spannhülse ansonsten identischer Auslegung zu einer niedrigeren Federkonstanten, was im Hinblick auf die Erzielung niedriger Auslösedrehmomente vorteilhaft ist.

Um eine möglichst gleichmäßige Verteilung der Federkraft über den Umfang der Spannhülse erzielen zu können, wird vorgeschlagen, daß der Schlitz im wesentlichen längs einer Schraubenlinie verläuft, der sich vorzugsweise über einen Umfangswinkel erstreckt, der ein ganzzahliges Vielfaches von 360° beträgt.

Das maximal übertragbare Drehmoment kann beispielsweise durch entsprechende Wahl der Wandstärke oder/und des Materials der Spannhülse einstellbar sein. Um zur Umstellung der Drehmomentkupplung auf einen neuen Wert des Auslösedrehmoments einen schnellen Wechsel der Spannhülse ermöglichen zu können, wird vorgeschlagen, daß die Spannhülse im unverformten Zustand mit einem geringem Spiel, beispielsweise von wenigen hundertstel Millimetern, über die Drehmomentübertragungselemente schiebbar ist. Die Drehmomentübertragungselemente werden bei einem derartigen Spannhülsenwechsel durch das sie umgebende Schmierfett in den Ausnehmungen der Werkzeugaufnahme gehalten.

Um ein unbeabsichtigtes Abfallen der Spannhülse vom Werkzeughalter verhindern zu können, wird vorgeschlagen, daß die Spannhülse an dem Werkzeughalter mittels einer Sicherungshülse gesichert ist. Diese Sicherungshülse kann ferner dazu genutzt werden, das Werkzeug in dem Werkzeugzeughalter axial zu sichern. Hierzu kann die Sicherungshülse an dem Werkzeughalter zwischen einer Werkzeugsicherungstellung und einer Werkzeugfreigabestellung verschiebbar angeordnet sein, wobei ihr darüber hinaus Sicherungselemente zugeordnet sein können, welche Durchbrechungen des Werkzeughalters durchsetzen und in der Werkzeugsicherungsstellung in eine am Außenumfang des Werkzeugs vorgesehene Halterungsnut eingreifen.

Die beiliegenden Figuren erläutern die Erfindung anhand von Ausführungsbeispielen. Es stellen dar:
- Fig. 1: eine Seitenansicht, teilweise im Schnitt einer Verschraubungseinrichtung;
- Fig. 2: eine weitere Seitenansicht, teilweise im Schnitt in Pfeilrichtung II der Fig. 1;
- Fig. 3: wiederum eine Ansicht in Pfeilrichtung II der Fig. 1, jedoch an anderen Stellen geschnitten;
- Fig. 4: einen Schnitt nach Linie IV-IV der Fig. 1;
- Fig. 5: einen Schnitt nach Linie V-V der Fig. 1;
- Fig. 6: ein Detail einer Positionierungseinrichtung für die durch das Schraubwerkzeug zu erfassenden zweiten Schraubkomponenten als Vergrößerung des Bereichs A in Fig. 1;
- Fig. 7: ein bevorzugtes Betriebsablaufprogramm für die Verschraubungseinrichtung nach Fig. 1 - 6 als Teil einer übergeordneten Montagemaschine;
- Fig. 8: eine Schraubeinrichtung, angebaut an einer übergeordneten Montagemaschine im Schema;
- Fig. 8a: das Produkt eines Verschraubungsvorgangs, das mit der Verschraubungseinrichtung nach Fig. 1 - 8 hergestellt wurde;
- Fig. 9: einen Schnitt entsprechend dem Schnitt nach Fig. 1 mit einer Abwandlung der Axialankopplungsmittel für die Durchführung eines abgewandelten Betriebsablaufsprogramms;
- Fig. 10: eine weitere abgewandelte Ausführungsform einer mit einer erfindungsgemäßen Drehmomentkupplung ausgestatteten Verschraubungseinrichtung in einer einer Teilansicht von Fig. 1 entsprechenden Darstellung;
- Fig. 11: eine erfindungsgemäße Drehmomentkupplung im Schnitt längs der Linie XI-XI in Fig. 10, wobei sich die Drehmomentkupplung im Drehmomentübertragungszustand befindet;
- Fig. 12: eine Ansicht ähnlich Fig. 11 der Drehmomentkupplung in ihrem Auslösezustand; und
- Fig. 13: eine Seitenansicht der Spannhülse der erfindungsgemäßen Drehmomentkupplung.

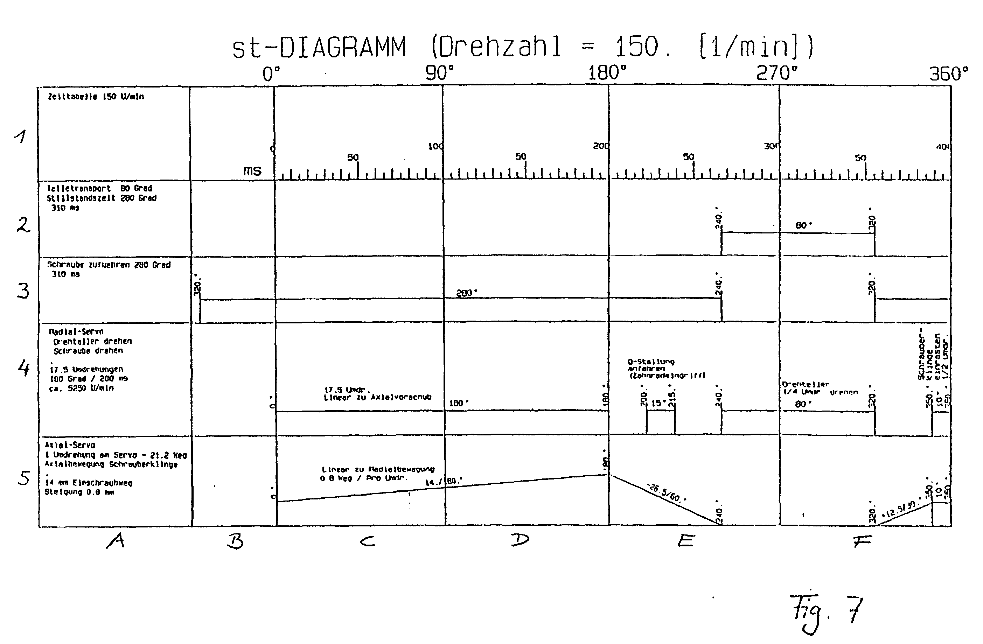

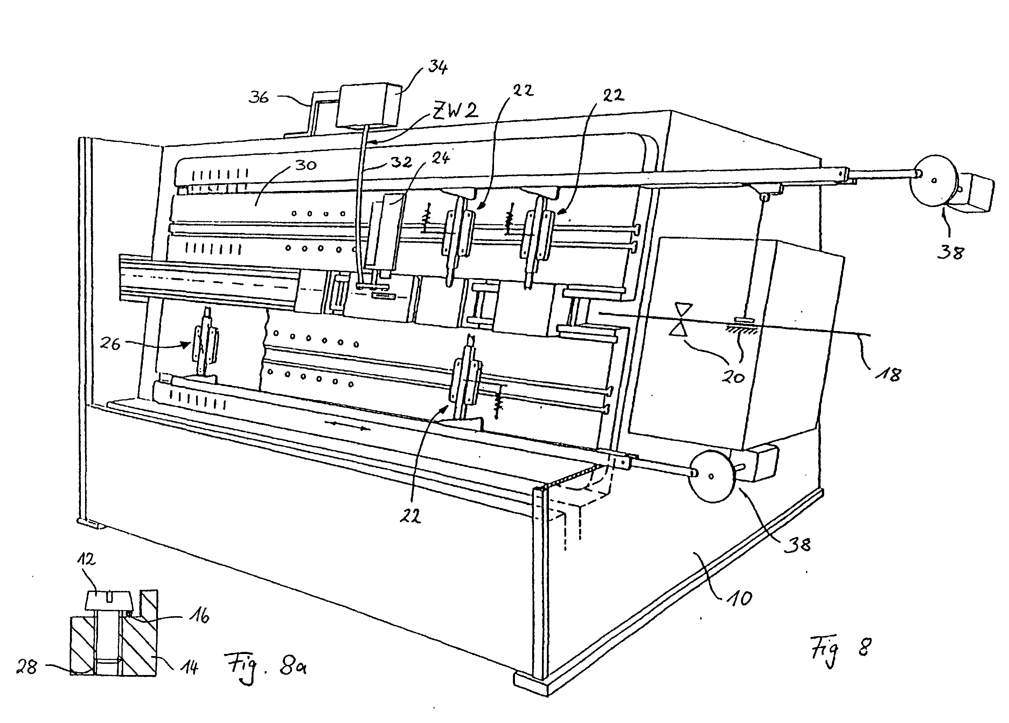

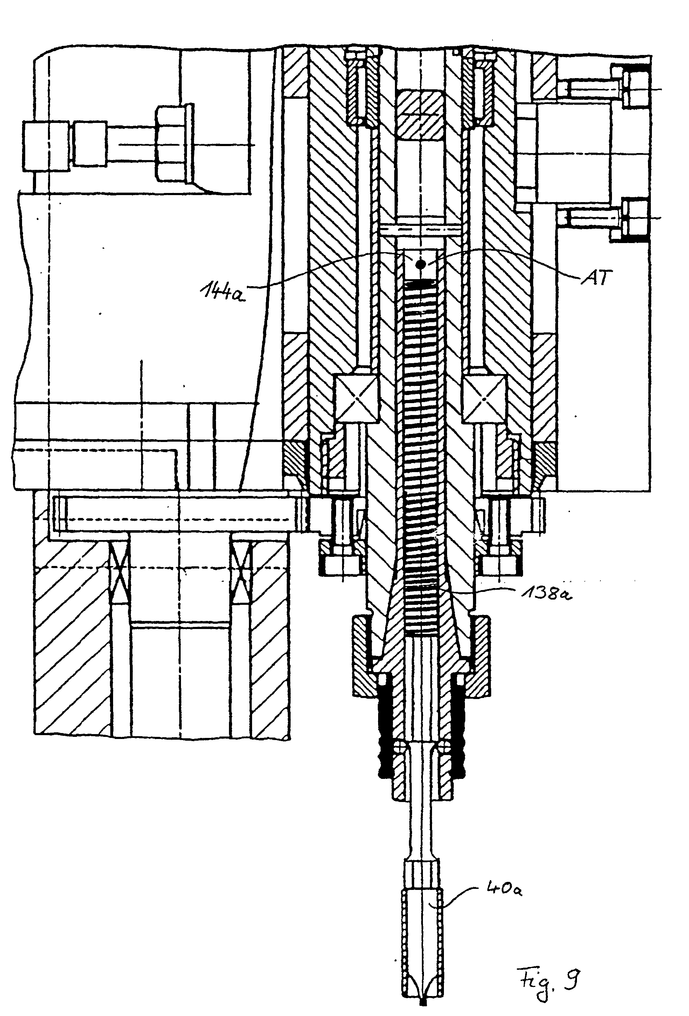

Bevor an Hand der Fig. 9 - 13 ein mit einer erfindungsgemäßen Drehmomentkupplung ausgestatteter Verschraubungsautomat als Beispiel für eine erfindungsgemäße Werkzeugmaschine näher erläutert werden wird, soll zur Verdeutlichung des technologischen Hintergrunds zunächst eine Hochgeschwindigkeits-Verschraubungseinrichtung beschrieben werden, wie sie aus der DE 197 09 495 A1 bekannt ist, deren gesamte Offenbarung hiermit in Bezug genommen wird:

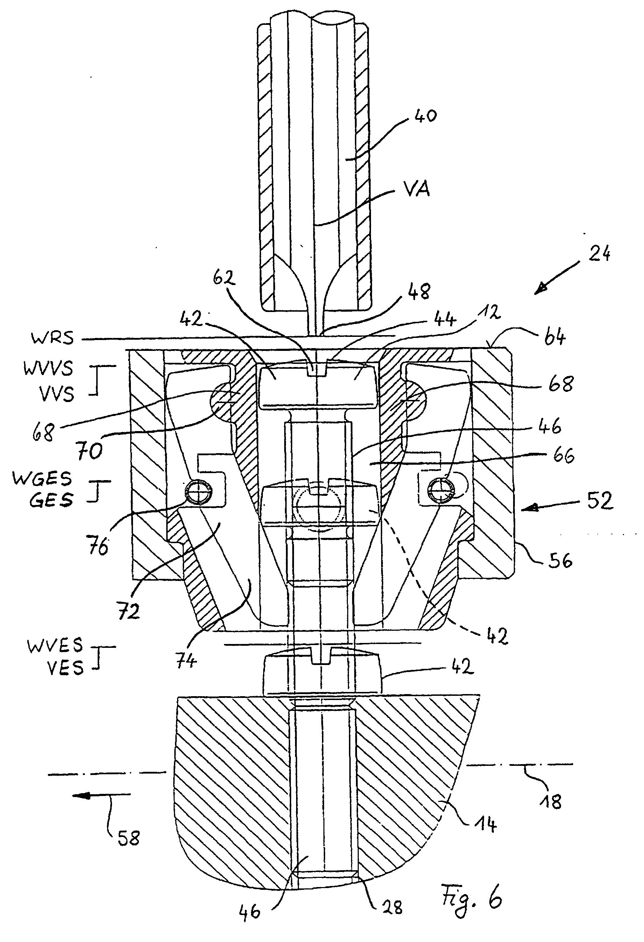

In Fig. 8 ist eine Montagemaschine 10 dargestellt, welche beispielsweise dazu bestimmt ist, um Schrauben 12 in Klemmkörper 14 gemäß Fig. 8a einzuschrauben, in denen später durch Nachverschraubung ein elektrischer Leiter 16 eingeklemmt werden soll.

Bei der in der Fig. 8 dargestellten Montagemaschine, handelt es sich um eine Maschine, wie sie beispielsweise in der DE 40 07 204 A1 in allen Einzelheiten dargestellt und beschrieben ist. In dieser Maschine wird beispielsweise wie folgt gearbeitet:

Ein Blechband 18 wird mittels einer Bandzuführeinrichtung zugeführt und durch Biege-, Stanz-, Loch- und Gewindebohrwerkzeuge 22 zu Formstücken 14 verabeitet. Durch eine Verschraubungseinrichtung 24 werden sodann die Schrauben 12 in die Klemmkörper 14 eingeschraubt. In einer Trenneinrichtung 26 werden schließlich die einzelnen Klemmeinrichtungen 14 von dem Band 18 abgetrennt und vereinzelt.

Man kann die Klemmkörper 14 mit ihren Gewindebohrungen 28 als erste Schraubkomponenten und die Schrauben 12 als zweite Schraubkomponenten verstehen.

Die Verschraubungseinrichtung 24 ist als vormontierte Einheit an einer Werkzeugplatte 30 der Montagemaschine 10 befestigt und kann bei Bedarf angebaut oder gelöst werden. Durch ein Rohr 32 werden die Schrauben 12 einzeln der Reihe nach zugeführt; sie kommen von einer Schraubenversorgungseinheit 34, in welcher die Schrauben zunächst ungeordnet aufgenommen sind und sodann geordnet und zum Zuführen in die Verschraubungseinrichtung 24 orientiert werden. Die Schraubenversorgungseinrichtung 34 ist durch einen Träger 36 an der Montagemaschine 10 angebaut.

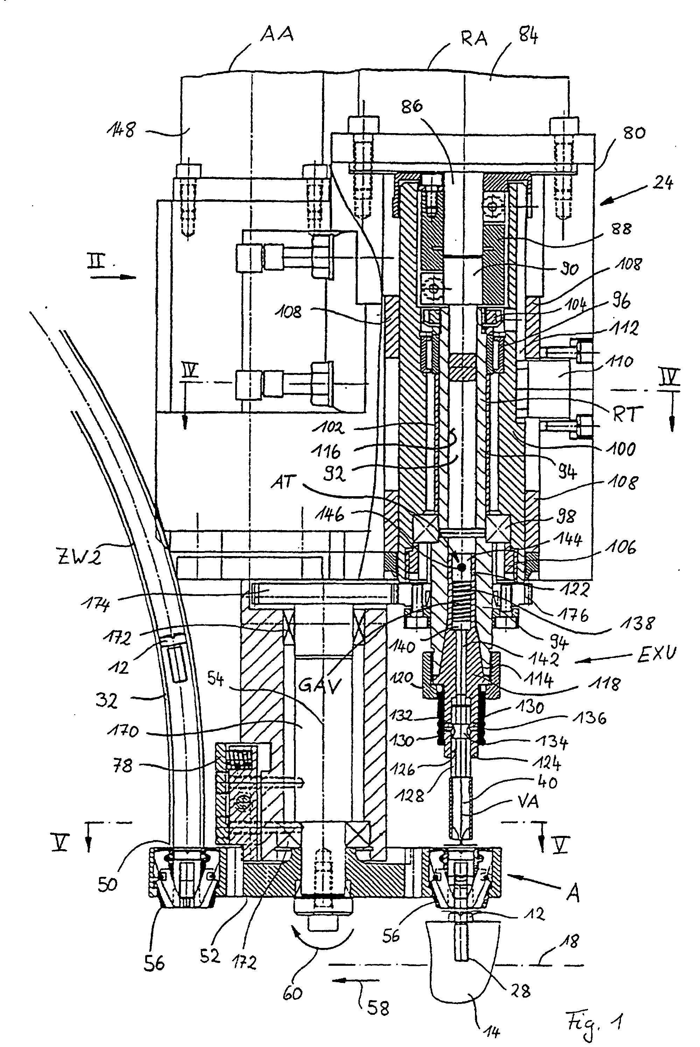

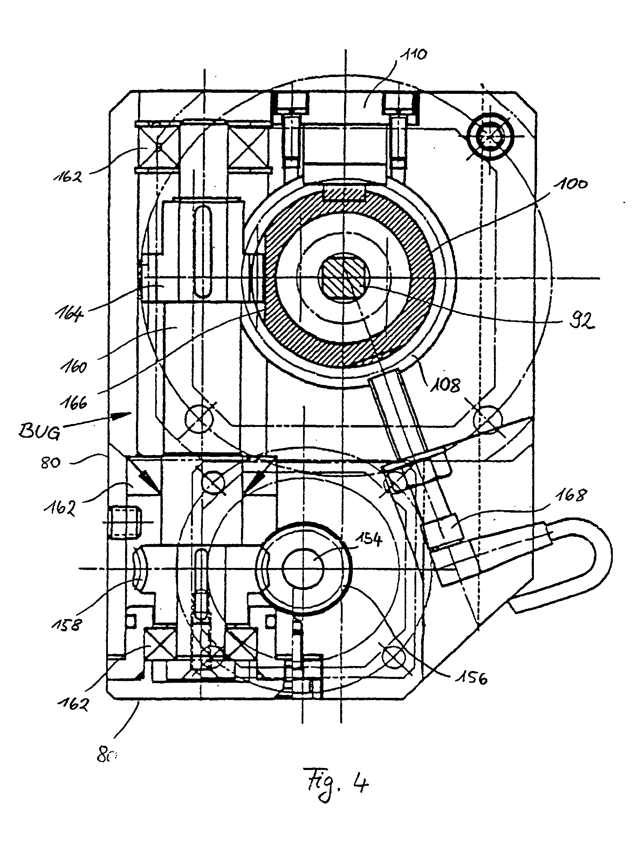

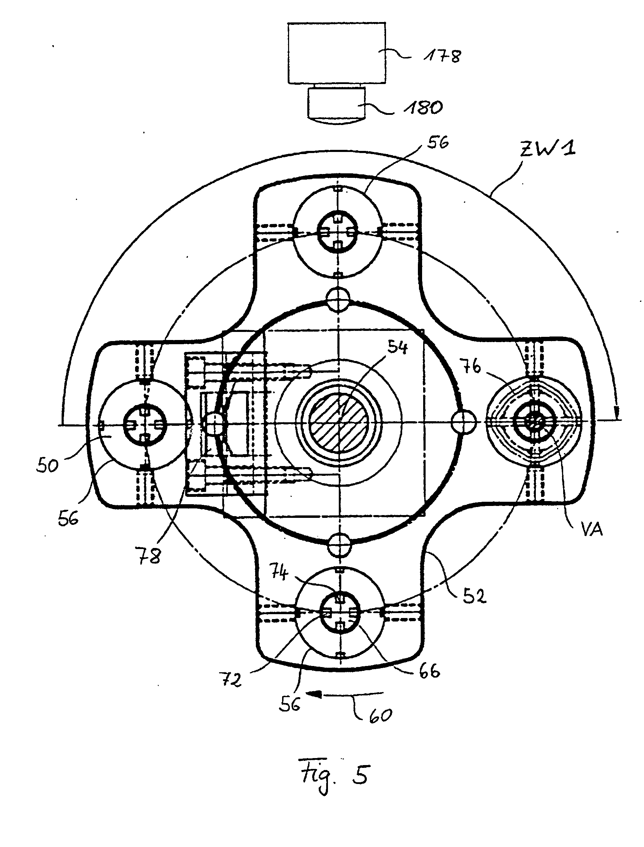

In den Fig. 1 - 6 erkennt man Einzelheiten der Verschraubungseinrichtung 24, wobei Fig. 6 die Details am unteren Ende der Verschraubungseinrichtung 24 von Fig. 1 darstellt, dort wo in Fig. 1 das Bezugszeichen A erscheint.

Die Klemmkörper 14 gelangen gemäß Fig. 1 als Teile des Bandes 18 oder als bereits vereinzelte Teile, die auch außerhalb der Montagemaschine 10 hergestellt worden sein können und im Maschinentakt der Montagemaschine 10 zugeführt werden können, in den Bereich der Verschraubungseinrichtung 24. Die Klemmkörper 14 erreichen die Verschraubungseinrichtung 24 im Arbeitstakt der Bearbeitungsmaschine gemäß Fig. 8, welcher durch die Umdrehungszahl der Antriebseinrichtungen bestimmt ist. In jedem Arbeitstakt, d.h. bei jeweils einem Umlauf der Antriebseinrichtungen 38, muß eine Schraube 12 mit einem Klemmkörper 14 verschraubt werden. Je schneller der Umlauf der Antriebseinrichtungen 38 ist, umso weniger Zeit steht für das Einschrauben der Schrauben 12 in die Klemmkörper 14 zur Verfügung. Dabei ist auch zu bedenken, daß für das Einschrauben der Schrauben in die Klemmkörper 14 nicht die ganze "Taktzeit", also nicht die ganze Umlaufzeit der Antriebseinrichtungen 38 verfügbar ist, sondern jeweils nur ein Bruchteil dieser Taktzeit: Ein wesentlicher Teil der Taktzeit wird nämlich für den Transport der Klemmkörper 14 in den Bereich der Verschraubungseinrichtung 24 benötigt und für den Weitertransport der mit Schrauben 12 versehenen Klemmkörper 14 aus dem Bereich der Verschraubungseinrichtung 24 in Richtung auf die Trenneinrichtung 26. Es steht also von der Umlaufzeit der Antriebseinrichtungen 38 nur ein Bruchteil für die Verschraubung zur Verfügung, währenddessen der Klemmkörper 14 gegenüber der Verschraubungseinrichtung 24 stillsteht. In Fig. 1 ist ein Zustand gezeichnet, in welchem ein Klemmkörper 24 mit seiner Gewindebohrung 28 gegenüber der Verschraubungseinrichtung 24 stillsteht, wobei sich die Gewindebohrung 28 des Klemmkörpers 14 in Flucht mit der Verschraubungsachse VA eines Schraubwerkzeugs 40 befindet. Die einzelnen Schrauben 12 werden durch das Rohr 32 im Arbeitstakt zugeführt, so daß jeweils dann, wenn ein Klemmkörper 14 die in Fig. 1 und 6 dargestellte Verschraubungsbereitschaftsstellung einnimmt, eine zugehörige Schraube 12 sich in Verschraubungsvorbereitungsstellung gemäß Fig. 6 befindet.

In Fig. 6 ist die Schraube 12 mit ihrem Schraubenkopf dreifach dargestellt. Die einzelnen Stellungen, die mit VVS, GES und VES bezeichnet sind, sind jeweils gekennzeichnet durch die Lage des Scheitels 44 des Schraubenkopfs 42. VVS bedeutet die Verschraubungsvorbereitungsstellung der Schraube 12, GES bedeutet die Gewindeeinfaßstellung der Schraube 12, d.h. diejenige Stellung, in welcher das untere Ende des Schraubenschafts 46 zur Anlage an den oberen Ausgang der Gewindebohrung 28 kommt, und VES bedeutet diejenige Stellung der Schraube 12, in welcher der Schraubvorgang der Schraube 12 gegenüber der Gewindebohrung 28 abgeschlossen ist. In Fig. 6 befindet sich das Schraubwerkzeug 40 in seiner Werkzeugrückzugsstellung; diese Werkzeugrückzugsstellung ist durch die Linie WRS angedeutet, auf welcher sich die Klinge 48 des Schraubwerkzeugs 40 in der Werkzeugrückzugsstellung befindet.

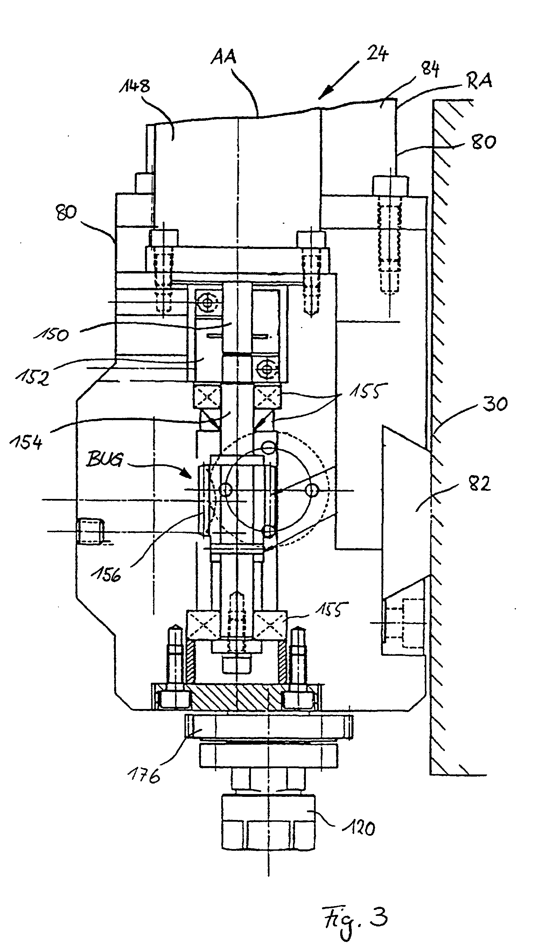

In dem in Fig. 6 dargestellten Zustand kann die Schraube 12 in die Verschraubungsvorbereitungsstellung VVS gebracht werden. Dies ergibt sich aus Fig. 1. In Fig. 1 endet das Rohr 32 in einer Übergabestellung 50 frei über einem Drehteller 52, der an der Verschraubungseinrichtung 24 um eine Tellerdrehachse 54 schrittweise drehbar gelagert ist. Der Drehteller 52 hat, wie in Fig. 5 dargestellt, insgesamt vier Nester 56, welche als Positionierungsmittel für die Schrauben zu verstehen sind und sich als Durchgänge verstehen, auf welche bei der Detailbeschreibung der Fig. 6 noch einzugehen sein wird.

Wenn ein Nest der insgesamt vier Nester, wie in Fig. 1 dargestellt, sich in Flucht mit der Verschraubungsachse VA befindet, so befindet sich ein diametral gegenüberliegendes Nest 56 in der Übergabestellung 50, so daß dort, während die in der Verschraubungsachse VA befindliche Schraube 12 bis in die Verschraubungsendstellung VES gebracht wird, eine weitere Schraube 12 durch das Rohr 32 in das diametral gegenüberliegende Nest 56 eingesetzt wird, und zwar jeweils in die Stellung, die in Fig. 6 mit VVS bezeichnet ist.

Wenn die Einschraubung im Bereich der Verschraubungsachse VA beendet ist, d.h. wenn die Schraube 12 in Fig. 6 die durch VES gekennzeichnete Position erreicht hat, wird das Blechband 18 und mit ihm der Klemmkörper 14 in Pfeilrichtung 58 fortgeschaltet. Gleichzeitig führt der Schaltteller 52 eine 90°-Drehung in Pfeilrichtung 60 aus, so daß das in Fig. 5 obenliegende Nest 56 (in Fig. 1 verdeckt) mit der von ihm während der vorletzten Beschickung durch das Rohr 32 aufgenommenen Schraube in den Bereich der Verschraubungsachse VA gelangt und das soeben beschickte Nest 56 in die Position des in Fig. 5 obenliegenden Nests gelangt.

Der Arbeitsablauf der Verschraubungseinrichtung im Rahmen des Arbeitsablaufs der Montagemaschine 10 ist in dem ST-Diagramm gemäß Fig. 7 dargestellt. ST-Diagramm bedeutet dabei Weg (S -Zeit, T - Diagramm), weil wesentliche Ablaufphasen durch eine Wegzurücklegung in Abhängigkeit von der Zeit gekennzeichnet sind. In dem ST-Diagramm sind zur besseren Erläuterung einzelne Zeilen mit 1 - 5 und einzelne Spalten mit A - F bezeichnet. Es können dann im folgenden einzelne Planquadrate, z.B. Planquadrat 3B, bezeichnet werden.

Das ST-Diagramm beruht auf der Annahme einer Drehzahl der Maschine, also der Antriebseinrichtungen 38 in Fig. 8 von 150 U/min. Dies entspricht einer Taktzeit von 400 Millisekunden. Diese 400 Millisekunden sind in der Spalte 1 in Zuordnung zu dem "Maschinenwinkel" der Montagemaschine 10 eingezeichnet. Dabei ist für die Darstellung der Nullpunkt so gewählt, daß die Taktzeit (null Millisekunden) entsprechend 0° Maschinenwinkeleinstellung dann beginnt, wenn die eigentliche Verschraubung beginnt, d.h. wenn das Schaftende des Schraubenschafts 46 in das obere Ende der Gewindebohrung 28 eingefaßt hat, entsprechend der Position GES in Fig. 6, und wenn überdies die Schraubenklinge 48 in den Eingriffsschlitz 62 des Schraubenkopfs 42 eingefaßt hat, so daß mit gleichbleibender Relation von Drehzahl der Schraube und axialer Vorschubgeschwindigkeit des Schraubwerkzeugs 40 der Übergang von der Schraubenposition GES zur Schraubenposition VES durchgeführt werden kann.

In Zeile 4 ist durch die horizontale Linie in den Planquadraten 4B und 4C eine gleichbleibende Drehbewegung (vorzugsweise konstante Drehzahl) des Schraubwerkzeugs durch eine horizontale Line dargestellt, wobei angenommen wird, daß diese Drehbewegung mit einer Drehzahl von ca. 5250 Umdrehungen pro Minute während eines Maschinenwinkels der Montagemaschine (Maschinenwinkel an den Antriebseinrichtungen 38 der Fig. 8) während einer Partialtaktzeit von 200 Millisekunden erfolgt und daß während dieser 200 Millisekunden das Schraubwerkzeug 40 und damit die Schraube 12 insgesamt 17,5 Umdrehungen ausführen. Zu diesen Daten wird auch auf die Legenden des Planquadrats 4A verwiesen. Die in den Planquadraten 4C - 4D dargestellte Drehbewegung des Schraubwerkzeugs 40 entspricht einer axialen Vorschubbewegung des Schraubwerkzeugs 40, die in den Planquadraten 5C und 5D dargestellt ist. Die in diesen Planquadraten dargestellte, leicht ansteigende Linie entspricht der Axialannäherung der Schraube 12 von der Stellung GES bis in die Stellung VES während der Verschraubung. Anders ausgedrückt kann man auch sagen, daß diese Linie in den Planquadraten 5C und 5D dem Vorschub des Schraubwerkzeugs 40 während der Verschraubungsphase entspricht. In der Zeile 2 findet sich in den Planquadraten 2C und 2D kein Eintrag. Dadurch ist zum Ausdruck gebracht, daß während der Verschraubungsphase entsprechend den Planquadraten 4C, 4D und 5C, 5D der Transport des Blechbandes 18 ruht, d.h. der Klemmkörper 14 gemäß Fig. 1 und 6 die Position in der Verschraubungsachse VA einnimmt.

Weiterhin ist in der Zeile 3 des ST-Diagramms durch die horizontale Linie, die sich u.a. auch durch die Planquadrate 3C und 3D erstreckt, angedeutet, daß Zeit von 200 Millisekunden, entsprechend 180°, für die Schraubenzuführung durch das Rohr 32 zur Verfügung steht (Anmerkung: Es stehen noch zusätzliche Zeiten in den Planquadraten 3B und 3E für diese Zuführung zur Verfügung, auf die noch eingegangen wird). Hierzu wird auf die Legende in 3A zusätzlich verwiesen. Man bedenke: Während der eigentlichen Verschraubungsphase entsprechend den Planquadraten 4C, 4D und 5C, 5D muß die gerade zu verschraubende Schraube 12 in der Verschraubungsachse VA verbleiben. Der Drehteller 52 kann also nicht drehen. Deshalb kann in diesem Zeitraum eine weitere Schraube 12, wie in Fig. 1 dargestellt, durch das Rohr 32 in das gemäß Fig. 5 jeweils links liegende Nest 56 eingeführt werden.

Wenn die eigentliche Verschraubungsphase beendet ist, d.h. wenn in den Zeilen 4 und 5 jeweils das Ende der Planquadrate 4D und 5D erreicht ist, so ist die Schraube 12 soweit vollständig in den Klemmkörper 14 eingeschraubt, als dies beabsichtigt ist. Das Schraubwerkzeug 40 kann dann wieder zurückgezogen werden. Diese Rückzugsbewegung ist in der Zeile 5, und zwar dort in dem Planquadrat 5E dargestellt. Die Rückzugsbewegung des Schraubwerkzeugs 40 erfolgt während einer Zeit von ca. 67 Millisekunden, entsprechend einem Maschinenwinkel der Antriebsvorrichtungen 38 von ca. 60°. Der Rückhub beträgt beispielsweise 26,5 mm, entsprechend dem Ordinatenwert der geneigten Linie im Planquadrat 5E. Nach Durchlaufen dieses Wegs ist die in Fig. 6 durch die Linie WRS dargestellte Werkzeugrückzugsstellung wieder erreicht. Man beachte hier die relativ starke Neigung der Linie in dem Planquadrat 5E, welche einer relativ großen Rückzugsgeschwindigkeit der Schrauberklinge 48 aus der nach Beendigung der eigentlichen Verschraubungsphase erreichten Stellung WVES in die in Fig. 6 durch die Linie WRS angedeutete Werkzeugrückzugsstellung darstellt. Tatsächlich kann die Rückzugsgeschwindigkeit des Schraubwerkzeugs wesentlich größer sein als die Annäherungsgeschwindigkeit des Schraubwerkzeugs, die in den Planquadraten 5C und 5D durch die weit weniger geneigte Linie dargestellt ist.

Während der Rückzugsbewegung des Schraubwerkzeugs entsprechend Planquadrat 5E bedarf es einer Drehbewegung des Schraubwerkzeugs 40 grundsätzlich nicht. Dies ist in dem Planquadrat 4E dargestellt, wo zwischen 180° und 240° grundsätzlich keine Drehbewegung des Schraubwerkzeugs 40 erfolgt. Wenn an mittlerer Stelle dieses Planquadrats während eines kurzen Maschinenwinkels zwischen 200° und 215° ° der Antriebseinrichtungen 38 gemäß Fig. 8 dennoch eine kurze Phase des Drehens des Schraubwerkzeugs 40 vorgesehen ist, so hängt dies mit einer Spezialkontruktion der Schraubeinrichtung zusammen, auf die später noch eingegangen wird.

Zu beachten ist weiter, daß die früher bereits unter Bezugnahme auf die Planquadrate 3C und 3D angesprochene Schraubenzuführung durch das Rohr 32 auch noch während der Rückzugsphase des Schraubwerkzeugs, also im Winkelbereich von 180° - 240° des Maschinenwinkels der Antriebsvorrichtungen 38, fortgesetzt werden kann. Dies ist deshalb möglich, weil der Drehteller 52 während des Rückzugs des Schraubwerkzeugs 40 in Richtung auf die Rückzugsstellung WRS gemäß Fig. 6 immer noch stehen bleiben muß, mindestens solange, bis das Schraubwerkzeug in Fig.1 aus dem soeben geleerten Nest 56 völlig zurückgezogen ist und den nächsten Drehschaltschritt erst danach vollziehen kann.

Erst wenn bei einem Maschinenwinkel von 240°, gemessen an den Antriebsvorrichtungen 38, das Schraubwerkzeug 40 vollständig aus dem vorher von der jeweiligen Schraube entleerten Nest 56 zurückgetreten ist, d.h. die Stellung WRS gemäß Fig. 6 erreicht hat, kann der Drehteller 52 eine Drehbewegung beginnen, welche in den Planquadraten 4E und 4F zwischen 240 und 320° eingezeichnet ist. Innerhalb dieses Maschinenwinkels vollführt der Drehteller eine Drehung um 90°, so daß das soeben entleerte Nest 56 entsprechend dem rechts liegenden Nest in Fig. 5 im Uhrzeigersinn weitergeschaltet wird in die dort unten eingezeichnete Nestposition, während das bereits vorher gefüllte, in Fig. 5 obere Nest 56 in den Bereich der Verschraubungsachse VA gelangt. Man beachte, daß in den Planquadraten 4E und 4F die horizontale Linie zwischen 240° Maschinenwinkel und 320° Maschinenwinkel primär die Drehbewegung des Drehtellers 52 darstellt. Eine Drehbewegung des Schraubwerkzeugs 40 in dieser Phase ist möglich, aber nicht notwendig. Tatsächlich tritt während dieser Phase zwischen 240 und 320° des Maschinenwinkels auch eine Drehbewegung des Schraubwerkzeugs ein, die mit der Drehbewegung des Drehtellers 52 einhergeht. Dies hängt mit einer Besonderheit der weiter unten zu beschreibenden Schraubeinrichtung 24 zusammen. Die Drehbewegung des Schraubwerkzeugs 40 in dieser Phase von 240° - 320° Maschinenwinkel ist aber schraubtechnisch belanglos, weil in dieser Phase ja das Schraubwerkzeug 40 vollständig nach oben in die Position WRS gemäß Fig. 6 zurückgezogen ist, in der es keine schraubende Bewegung in eine Schraube 42 einleiten kann.

Die Zuführung der nächsten Schraube durch das Rohr 32 ist bei einem Maschinenwinkel von 240° der Antriebsvorrichtungen 38 beendet, wenn die Drehbewegung des Schalttellers in dem Arbeitswinkelbereich von 240° - 320° bei 240° beginnt. Dies ist notwendig, da ja während der Drehbewegung des Drehtellers 52 in dem Arbeitswinkelbereich von 240° - 320° (Planquadrate 4E und 4F) keine Übergabe von Schrauben 12 an der Übergabe 50 von dem Rohr 32 an ein Nest 56 stattfinden kann.

Wenn gemäß Zeile 4 die Schaltbewegung des Drehtellers 52 um 90° erfolgt ist, dies ist erreicht, wenn der Maschinenwinkel der Antriebseinrichtungen 38 von Fig. 8 den Winkelwert 320° im Planquadrat 4F erreicht hat, so befindet sich erneut eine Schraube 12 im Bereich der Verschraubungsachse VA und das Schraubwerkzeug, das sich zu diesem Zeitpunkt, d.h. bei Erreichen des Maschinenwinkels 320° noch in der Rückzugsstellung WRS gemäß Fig. 6 befindet, kann nun erneut eine Annäherungsbewegung beginnen, wie in der Zeile 5, und zwar dort in dem Planquadrat 5F dargestellt ist.

Die im Planquadrat 5F dargestellte geneigte Linie zwischen einem Maschinenwinkel von 320° und einem Maschinenwinkel von 350° an den Antriebseinrichtungen 38 der Fig. 8 entspricht dem Übergang des Schraubwerkzeugs 40 aus der Rückzugsstellung WRS gemäß Fig. 6 bis zum Anschlag an der Oberseite des Schraubenkopfs 42 und darüberhinaus bis zum Auftreffen des von dem Schraubwerkzeug 40 durch seine abwärts gerichtete Annäherungsbewegung nach unten mitgenommenen Schraubenschaftendes gegen den oberen Eingang der Gewindebohrung 28. Während dieses Abwärtsgangs des Schraubwerkzeugs 40 und mit ihm der Schraube 12 findet zunächst, wie aus Planquadrat 4F zu ersehen, keine Drehbewegung des Schraubwerkzeugs statt, denn die eigentliche Verschraubungsphase hat ja noch nicht begonnen. Zu beachten ist aber, daß während des Übergangs von dem Arbeitswinkel 320° bis zum Arbeitswinkel 350° bei nunmehr wieder stillstehendem Drehteller (der Stillstand ist beim Arbeitswinkel von 320° eingetreten, wie aus dem Planquadrat 4F zu ersehen) die Zuführung einer weiteren Schraube bereits wieder beginnen kann, wie im Planquadrat 3F im Anschluß an den Arbeitswinkel von 320° zu ersehen. Diese im Planquadrat 3F beginnende erneute Zuführbewegung einer weiteren Schraube ist in dem Planquadrat 3Bb zum besseren Verständnis noch einmal dargestellt. Man erkennt also, daß für das Zuführen der einzelnen Schrauben durch das Rohr 32 insgesamt ein Arbeitswinkel von 280°, nämlich zwischen der Winkelstellung 320° und der Winkelstellung 240° der Antriebseinrichtungen 38 von Fig. 8 zur Verfügung steht.

Das Schraubwerkzeug 40 ist innerhalb der Verschraubungseinrichtung federnd abgestützt, so daß es bei der Abwärtsbewegung gemäß Planquadrat 5F zwischen 320° und 350° federnd ausweichen kann. Einzelheiten darüber werden im folgenden noch bei der Beschreibung der Verschraubungseinrichtung 24 erörtert. Hier genügtes, darauf hinzuweisen, daß während der abwärts gerichteten Annäherungsbewegung des Schraubwerkzeugs 40 zwischen dem Arbeitswinkel von 320° und dem Arbeitswinkel von 350° das Schraubwerkzeug 40 gegenüber einer es nach abwärts in Richtung auf den Klemmkörper 14 annähernden Axialtreiberbaugruppe AT nach oben federnd ausweichen kann, so daß bei einem Auftreffen der Klingenkante 48 auf der konvexen Oberseite 44 der Schraube 42, d.h. bei einem Verfehlen des in seiner Winkellage noch nicht definierten Schraubwerkzeug-Eingriffsschlitzes 62, unter Aufbau einer Federvorspannung an der konvexen Oberseite 44 liegen bleibt, ohne daß in dem axialen Kraftübertragungsweg zwischen der Klingenunterkante 48 und dem oberen Eingang der Gewindebohrung 28 eine Überbeanspruchung auftritt. Der durch die Federung unter Erteilung einer Federvorspannung aufgenommene Hubweg im Falle eines Auftreffens der Klingenunterkante 48 auf der konvexen Oberseite 44 der Schraube 42 ist so groß, daß die dabei eingeleitete Federvorspannung ausreicht, um nach Herstellung einer Winkeldeckung zwischen der Klinge 48 und dem Schraubwerkzeug-Eingriffsschlitz 62 ein zwangsläufiges Eintreten der Klingenunterkante 48 in den Schraubwerkzeug-Eingriffsschlitz 62 zu bewirken, und zwar so tief, daß nachfolgend das für die eigentliche Verschraubung benötigte Schraubmoment von der Klingenunterkante 48 auf den Schraubwerkzeug-Eingriffsschlitz 62 übertragen werden kann. Die aufgebaute Vorspannung ist dabei vorzugsweise so groß, daß auch dann, wenn die Klinge mit ihrer Unterkante 48 in den Schraubwerkzeug-Eingriffsschlitz 62 eingeschnappt ist, noch eine Restvorspannung besteht, die ausreicht, um die notwendige Drehmomentübertragung von der Klinge 48 auf den Schraubwerkzeug-Eingriffsschlitz 62 zu garantieren, selbst dann, wenn der Schraubwerkzeug-Eingriffsschlitz 62 konisch gestaltet ist.

Aus dem Planquadrat 5F der Zeile 5 ergibt sich, daß nach Erreichen des Maschinenwinkels von 350° der die Abwärtsbewegung des Schraubwerkzeugs bewirkende Axialvorschub in der Verschraubungseinrichtung 40 zum Stillstand kommt, entsprechend dem horizontalen Verlauf des Striches zwischen dem Arbeitswinkel 350° bis zum Arbeitswinkel 360°. Während dieser Arbeitswinkelphase dreht sich die Unterkante der Klinge 48 auf der konvexen Oberseite des Schraubenkopfs 42, ohne daß zunächst eine weitere Axialbewegung des Schraubwerkzeugs 40 eintritt. Erst wenn die Unterkante der Klinge 48 Parallelstellung zum Verlauf des Schraubwerkzeug-Eingriffsschlitzes 62 erreicht hat, springt die Klinge mit ihrer Unterkante 48 in den Schraubwerkzeug-Eingriffsschlitz 62 des Schraubenkopfs 42 hinein und stellt eine Kupplung für die Drehmomentübertragung während des eigentlichen Verschraubungsvorgangs her.

Die in dem Planquadrat 5F geradlinig eingezeichnete, geneigte Linie zwischen dem Arbeitswinkel von 320° und dem Arbeitswinkel von 350° ist nur schematisch zu verstehen. Sie soll nicht zwingend zum Ausdruck bringen, daßdie Annäherungsbewegung der Klingenunterkante 48 zwischen 320° und 350° mit konstanter Annäherungsgeschwindigkeit stattfindet. Es ist vielmehr denkbar und bringt Vorteile, wenn man die abwärts gerichtete Annäherungsgeschwindigkeit der Klingenunterkante 48 durch ein entsprechendes Programm so verlaufen läßt, daß beim Auftreffen der Klinge 48 auf die zunächst in der Stellung VVS innerhalb des Nests 56 gehaltene Schraube 12 die Auftreffgeschwindigkeit der Klingenunterkante auf der konvexen Oberseite 44 gering ist und weiterhin dann, wenn im Zuge der Abwärtsmitnahme der Schraube 12 in Richtung auf die Stellung GES die Auftreffgeschwindigkeit des unteren Endes des Schraubenschafts 46 auf den oberen Eingang der Gewindebohrung 28 ebenfalls gering ist. Durch die Geringhaltung der Auftreffgeschwindigkeit in diesen beiden Auftreffphasen kann die Gefahr eines Beschädigens der Oberseite 44 des gelegentlich hochfein bearbeiteten Schraubenkopfs 42 und auch die Gefahr einer Beschädigung der Gewindegänge am unteren Ende des Schraubenschafts 46 und am oberen Ende der Gewindebohrung 28 vermieden oder gering gehalten werden.

Die in dem Planquadrat 5F dargestellte Verweilzeit der Abwärtsbewegung zwischen dem Arbeitswinkel von 350° und dem Arbeitswinkel von 360° der Antriebvorrichtungen 38 ist so gewählt, daß innerhalb dieser Verweilzeit eine Drehbewegung des Schraubwerkzeugs 40 von einer halben Umdrehung (halbe Umdrehung des Schraubwerkzeugs 40) stattfinden kann, so daß selbst unter ungünstigsten Umständen ein Einschnappen der Klingenunterkante 48 in den Schraubwerkzeug-Eingriffsschlitz 62 stattfinden kann.

Damit die "Suchbewegung", die durch das Drehen der Klingenunterkante 48 auf der konvexen Oberseite 44 des Schraubenkopfes 42 vollzogen wird, für die Klinge selbst und für das Schraubenmaterial möglichst schonend ist, ist vorgesehen, daß während dieser Suchbewegung zwischen 350° und 360° gemäß Planquadrat 5F keine weitere Annäherungsbewegung der Klinge und auch keine weitere Vorspannungserhöhung stattfindet. Außerdem ist während dieser Suchphase, wie aus dem Planquadrat 4F zu ersehen, die Drehzahl des Schraubwerkzeugs zwischen dem Arbeitswinkel von 350° und dem Arbeitswinkel von 360° klein gehalten, was nicht nur eine schonende Behandlung der Oberseite 44 der jeweiligen Schraube 42 zur Folge hat, sondern auch ein zuverlässiges Einfallen der Klingenunterkante 48 in den Schraubwerkzeug-Eingriffsschlitz 62 gewährleistet: Ein Hinwegspringen der Klinge 48 über den Schraubwerkzeug-Eingriffsschlitz 62 im Zuge der Suchbewegung ist vermieden.

Erst wenn durch die Suchbewegung gemäß dem Planquadrat 4F und 5F dort jeweils zwischen 350 und 360° Maschinenwinkel mit Sicherheit ein Eingriff der Klingenunterkante 48 in den Schraubwerkzeug-Eingriffsschlitz 62 erreicht ist, beginnt die eigentliche Verschraubungsphase in der Stellung 0° des Arbeitswinkels der Antriebseinrichtungen 38 von neuem.

Zu den Legenden in der Spalte A ist noch folgendes anzumerken:

Teiletransport bedeutet Transport der Klemmstücke 14 durch die Bandzuführeinrichtung 20. Stillstandszeit 280° = 310 msec bedeutet Stillstandzeit des Drehtellers.

Schraubezuführen 280° bedeutet, daß die ganze Stillstandszeit von 280° = 310 msec des Drehtellers für das Zuführen der jeweiligen Schraube bis in das jeweils in der Übergabestellung 50 befindliche Nest 56 zur Verfügung steht. Zu beachten ist, daß diese für das Zuführen der Schraube reichlich bemessene Zeit sich weitgehend mit der eigentlichen Verschraubungsphase einer früher zugeführten Schraube überlappt, wie sich aus dem Vergleich der Zeilen 3, 4 und 5 ergibt.

Radial Servo ist ein Kurzausdruck für eine rotierende Werkzeugtreiber-Baugruppe, welche das Drehen des Schraubwerkzeugs während des eigentlichen Verschraubungsvorgangs gemäß Planquadraten 4C und 4D bewirkt.

Axial Servo ist ein Kurzausdruck für eine Axialtreiberbaugruppe, welche für die Axialbewegungen des Schraubwerkzeugs gemäß den Planquadraten 5C, 5D, 5E und 5F verantwortlich ist.

Einschraubweg 14 mm entspricht dem Einschraubweg der Schraube von der Stellung GES bis zur Stellung VES gemäß Fig. 6.

Steigung 0,8 mm ist die Steigung des Gewindes des Schraubenschaftes 46 und die Steigung des Innengewindes der Gewindebohrung 28 und entspricht der Relation der axialen Annäherungsbewegung gemäß den Planquadraten 5C und 5D und der Drehbewegung gemäßden Planquadraten 4C und 4D.

Man erkennt in Fig. 6, daß der Abstand der Klingenunterkante 48, dieser dargestellt durch die Linie WRS, in der Rückzugsstellung des Schraubwerkzeugs 40 von der Oberseite 44 der Schraube 12 äußerst kurz bemessen ist, so daß nach Einbringung der Schraube 12 in den Bereich der Verschraubungsachse VA durch Drehen des Drehtellers 52 nur eine äußerst kurze Zeit notwendig ist, um das Schraubwerkzeug 40 zum Eingriff mit der Oberseite 44 bzw. mit dem Schraubwerkzeug-Eingriffsschlitz 62 der Schraube 12 zu bringen. Dies ist deshalb möglich, weil durch die Drehbewegung des Drehtellers 52 um eine vertikale Achse, d.h. durch die Annäherungsbewegung der Nester 56 an die in Fig. 6 und 1 dargestellte Werkzeug-Eingriffsbereitschaftsstellung längs einer horizontalen Ebene das Vorbeigehen der in dem Bereich der Verschraubungsachse wandernden Schraube 12 an der Klingenunterkante 48 während des Drehwegs des Drehtellers 52 nur einen geringen Abstand der Klingenunterkante 48 von der Nestoberkante 64 erheischt. Weiterhin wird Zeit insbesondere auch dadurch eingespart, daß die zeitaufwendige Zuführung der Schrauben 12 durch das Rohr 32 die regelmäßig mit einer Vereinzelung und Orientierung der Schrauben 12 einhergehen muß, in zeitlicher Überlappung mit den Axialbewegungen gemäß den Planquadraten 5C, 5D, 5E und 5F stattfinden kann.

Weiterhin wird Zeit dadurch eingespart, daß die Rückzugsbewegung des Schraubwerkzeugs entsprechend dem Planquadrat 5E, wie durch die dortige größere Neigung der ST-Kurve von 180° - 240° Maschinenwinkel angedeutet, sehr viel rascher ablaufen kann als die den Planquadraten 5C und 5D entsprechende Annäherungsbewegung des Schraubwerkzeugs während der eigentlichen Verschraubungsphase.

Damit ist eine wesentliche Voraussetzung für kurze Verschraubungszeiten und damit für einen raschen Maschinenlauf der Montagemaschine 10 gewährleistet.

Die auf dem Drehteller 52 angebrachten vier Nester 56 (vgl. Fig. 5) sind im einzelnen aufgebaut wie in Fig. 6 dargestellt. Die Nester 56 umfassen jeweils einen axialen, d.h. zur Verschraubungsachse A parallelen Durchgang 66 durch den Drehteller 52. Dieser Durchgang 66 ist durch eine Schraubenkopfführungshülse 68 definiert, deren Innenquerschnitt dem Außenumfang des Schraubenkopfes 42 entspricht. Im oberen Bereich der Führungshülse 68 sind an einem Lagerwulst 70 Durchtrittshemmbacken 72 in gleichmäßiger Winkelverteilung über den Umfang der Schraubkopfführungshülse 68 schwenkbar gelagert. Diese Durchtrittshemmbacken ragen unter Federvorspannung mit ihren unteren Endabschnitten 74 in den Durchgang 66 hinein, so daß sie bei einer Abwärtsbewegung der Schrauben 12 zunächst eine Hemmwirkung auf das untere Ende der Schraubenschäfte 46 und später eine Hemmwirkung auf den unteren Rand der Schraubenköpfe 42 ausüben.

Beim Eintreffen einer Schraube 12 in der Übergabestellung 50 gemäß Fig. 1 treffen die Schrauben 12 mit den unteren Enden ihrer Schraubenschäfte 46 gegen die unteren Endabschnitte 74 der Durchtrittshemmbacken 72 auf, so daß die Schrauben in der in Fig. 6 dargestellten, durch die Linie VVS charakterisierten Verschraubungsvorbereitungsstellung zum Stillstand kommen.

Wenn sich der Drehteller 52 um zweimal 90° bewegt hat, so daß eine Schraube 12 von der Übergabestellung 50 in den Bereich der Verschraubungsachse VA gelangt ist und wenn dann das Verschraubungswerkzeug 40 seine Annäherungsbewegung gemäß Planquadrat 5F durchführt, so stößt der Schraubenkopf 42 mit seiner Unterkante gegen die unteren Endabschnitte 74 der Durchtrittshemmbacken 72, so daß eine Erhöhung der axialen Hemmkraft eintritt und die Schrauben 12 eine definierte Position einnehmen, in welcher die Suchbewegung des Schraubwerkzeugs gemäß Planquadrat 4F stattfinden kann. Es ist denkbar, daß beim Auftreffen des Schraubenkopfes 42 auf die Durchtrittshemmbacken 72 bereits annähernd Eingriff zwischen dem unteren Ende des Schraubenschafts 46 und dem oberen Eingang der Gewindebohrung 28 besteht. Es ist aber auch möglich, durch den Eingriff des Schraubenkopfes 42 mit den Durchtrittshemmbacken 72 eine Vorruhestellung herbeizuführen, d.h. eine Ruhestellung vor Herstellung des Eingriffs zwischen dem unteren Ende des Schraubenschafts 46 und dem oberen Eingang der Gewindebohrung 28, um schon in dieser Vorruhestellung die Suchbewegung durchführen zu können und dann mit definierter Annäherungsgeschwindigkeit den Schraubenschaft 46 an den oberen Eingang der Gewindebohrung 28 anzunähern und so eine äußerst schonende Eingriffsherstellung zwischen dem Außengewinde des Gewindeschafts 46 und dem Innengewinde der Gewindebohrung 28 zu erreichen.

Die Durchtrittshemmbacken 72 des Nests 56 sind durch einen Gummiring 76 oder durch eine zum Ring geschlossene Spiralfeder 76 belastet, so daß sie nur gegen Federkraft aus der in Fig. 6 gezeigten Stellung um den Wulst 70 ausschwenken können, wenn sie von dem unteren Ende des Schraubenschafts 46 oder dem unteren Rand des Schraubenkopfes 42 getroffen werden. Der Drehteller 52 ist in insgesamt vier jeweils um 90° voneinander beabstandete Winkelstellungen um die Drehachse 54 durch eine Verrastungseinrichtung 78 präzis festlegbar. Die Verrastungseinrichtung 78 ist dabei so gestaltet, daß der Drehteller in der jeweiligen Winkelstellung exakt festliegt, andererseits aber durch einen Drehantrieb unter Überwindung der Verrastungseinrichtung 78 fortgeschaltet werden kann.

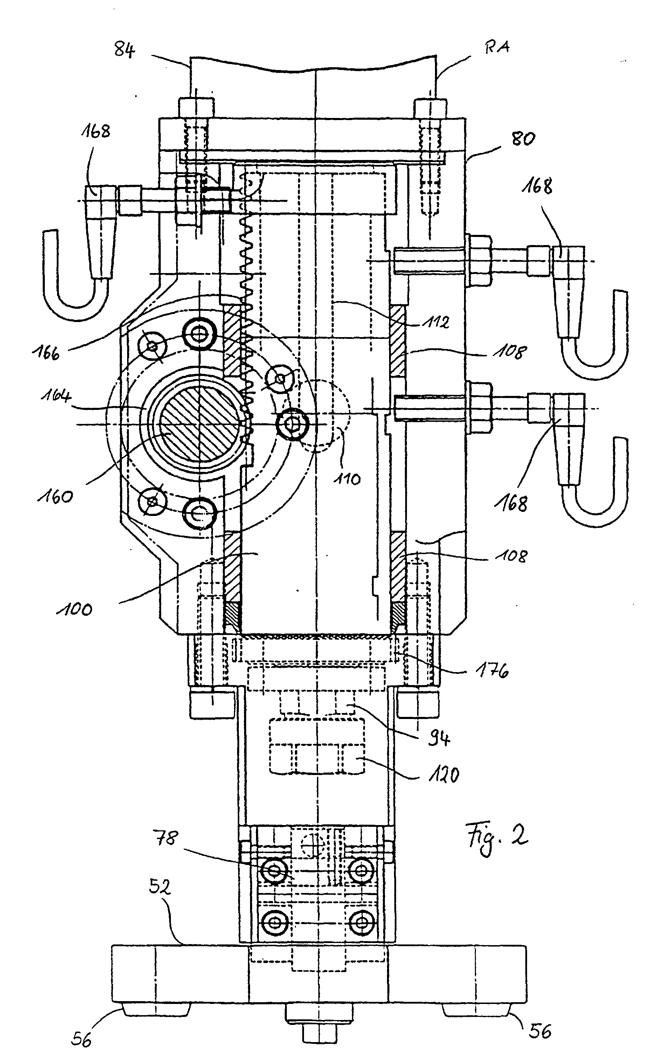

Die Schraubeinrichtung umfaßt einen Getriebeblock 80, der, wie aus Fig. 3 ersichtlich, mittels einer Schwalbenschwanzführung 82 an der Werkzeugplatte 30 verstellbar und lösbar angeordnet ist.

Der Getriebeblock 80 umfaßt einen axial feststehenden, rotierenden elektrischen Drehantriebsmotor 84, nämlich einen AC-Servo-Motor. Dieser elektrische Drehantriebsmotor 84 hat einen Läufer mit Ausgangswelle 86, auf welcher drehfest und axial unverschiebbar eine Wellenkupplungshülse 88 sitzt. Diese Wellenkupplungshülse 88 verbindet die Ausgangswelle 86 mit einer Anschlußwelle 90, die unverdrehbar und axial fest in der Wellenkupplungshülse 88 aufgenommen ist. Die Anschlußwelle 90 ist in ihrem unteren Abschnitt 92 als ein Polygonstab mit quadratischem Querschnitt ausgeführt. Auf diesem Polygonstab sitzt axial verschiebbar eine Werkzeugtreiberhülse 94. Die Werkzeugtreiberhülse 94 ist mittels zweier Wälzlager 96 und 98 in einer Pinole drehbar, aber gegenüber der Pinole axial unverschiebbar gelagert. Die beiden Wälzlager 96 und 98 sind durch eine Distanzhülse in axialem Abstand gehalten und durch eine Spannmutter 104 und eine Gegenspannmutter 106 unter Einschaltung der Distanzhülse 102 miteinander verspannt und an der Pinole 100 axial festgelegt.

Die Pinole 100 ist in Pinolenführungen 108 des Getriebeblocks 80 axial verschiebbar, jedoch gegenüber dem Getriebeblock 80 unverdrehbar. Zur Verhinderung des Drehens der Pinole 100 in den Pinolenführungen 108 ist an dem Getriebeblock eine Drehsicherungseinrichtung 110 angebracht, welche in einen Längsschlitz 112 der Pinole 100 eingreift. Das untere Ende des Längsschlitzes 112 definiert die oberstmögliche Stellung der Pinole 100.

Die Werkzeugtreiberhülse 94 ist mit einem Innenpolygon 116 ausgeführt, das in Richtung der Verschraubungsachse VA axial verschiebbar, aber unverdrehbar auf dem Polygonstab 92 sitzt und deshalb von dem Läufer, d.h. der Ausgangswelle 86 des elektrischen Drehantriebsmotors 84 in Drehung versetzt werden kann.

In einem Innenkonus 114 am unteren Ende der Werkzeugtreiberhülse 94 ist ein mit Außenkonus ausgebildetes Werkzeugaufnahmefutter 118 aufgenommen; dieses weist einen nach oben gerichteten axialen Fortsatz 122 auf, der einen polygonförmigen Außenquerschnitt besitzt und in dem Innenpolygon 116 unverdrehbar aufgenommen ist, so daß eine drehfeste Verbindung zwischen der Werkzeugtreiberhülse 94 und dem Werkzeugaufnahmefutter 118 gewährleistet ist. In einem unteren Endabschnitt 124 des Werkzeugaufnahmefutters 118 ist ein Polygonkanal 126 ausgebildet, in dem ein entsprechender Außenpolygonschaft 128 des Schraubwerkzeugs 40 unverdrehbar, aber axial verschiebbar aufgenommen ist. Die axiale Verschiebbarkeit des Werkzeugschafts 128 in dem Kanal 126 ist beschränkt durch das Zusammenwirken von Anschlagkugeln 130 einerseits, die in Radialbohrungen 132 des unteren Endabschnitts 124 radial beweglich aufgenommen sind, und einer Einschnürung 134 des Werkzeugschafts 128 andererseits. Die Anschlagkugeln 130 sind in den sie aufnehmenden Radialbohrungen 132 durch eine Sicherungshülse 136 gesichert, durch deren Verdrehung oder Axialverschiebung den Anschlagkugeln 130 radialer Austritt aus den Radialkanälen 132 gewährt werden kann, so daß diese nicht mehr mit der Einschnürung zusammenwirken und der Werkzeugschaft 128 dann aus dem Polygonkanal 126 entnommen werden kann. Auf diese Weise ist ein leichter Austausch des Schraubwerkzeugs 40 möglich, wenn dessen Klinge 48 abgenutzt ist.

Das Schraubwerkzeug 40 steht unter der Wirkung einer Schraubendruckfeder 138, die innerhalb des Werkzeugaufnahmefutters 118 aufgenommen und unter axiale Vorspannung gesetzt ist. Diese Schraubendruckfeder stützt sich mit ihrem unteren Ende an einem Kopf 140 eines Stempels 142 ab, der mit seinem unteren Ende an dem oberen Ende des Werkzeugschafts 128 aufliegt. Die Schraubendruckfeder 138 ist mit ihrem oberen Ende an einem Stopfen 144 abgestützt, der durch einen Querstift 146 an dem Werkzeugaufnahmefutter 118 axial festgelegt ist. Damit ist das Schraubwerkzeug 40 in dem Werkzeugaufnahmefutter 118 axial gefedert festgelegt, indem es durch die unter Vorspannung stehende Schraubendruckfeder 138 über den Stempel 142 in eine Stellung gedrückt wird, die durch den Eingriff der Anschlagkugeln 130 mit dem oberen Ende der Einschnürung 134 bestimmt ist. Bei Auftreten einer aufwärts gerichteten Kraft an dem Schraubwerkzeug 40, und zwar einer Kraft, welche die Vorspannkraft der Feder 138 überschreitet, kann sich das Schraubwerkzeug 40 gegenüber dem Werkzeugaufnahmefutter 118 nach oben verschieben unter zunehmender Kompression der Schraubendruckfeder 138 solange, bis das untere Ende der Einschnürung 40 gegen die Anschlagkugeln 130 stößt.

Das Werkzeugaufnahmefutter 118 kann zusammen mit der Schraubendruckfeder 138 durch Lösen der kappenförmigen Spannmutter 120 leicht aus der Werkzeugtreiberhülse 94 ausgebaut werden, so daß es leicht möglich ist, nach Bedarf unterschiedliche Werkzeugaufnahmefutter mit unterschiedlichen Polygonkanälen für verschiedene Schraubwerkzeuge oder/und unterschiedlichen Schraubendruckfedern 138 für unterschiedliche Vorspannungen auszutauschen. Zum Austausch des Werkzeugs 40 allein, Austausch, der wegen der Abnützung dieses Werkzeugs häufiger vorgenommen werden muß, genügt es, die Sicherungshülse 136 in eine Kugelfreigabestellung zu bringen.

Die Pinole 100 ist durch einen rotierenden elektrischen Axialbewegungsmotor 148 verstellbar. Bei Axialverstellung nimmt die Pinole 100 über die Wälzlager 108 die Werkzeugtreiberhülse 94 in axialer Richtung mit und damit auch das Werkzeugaufnahmefutter 118 und das Schraubwerkzeug 40. Auf diese Weise kann neben der von der Ausgangswelle 86 des elektrischen Drehantriebsmotors 84 erzeugten Drehbewegung auf das Drehwerkzeug auch eine Axialbewegung auf das Drehwerkzeug 40 übertragen werden, wie es nach der Beschreibung des Betriebsablaufs gemäß Fig. 7 erforderlich ist.

Der elektrische Axialantriebsmotor 148 besitzt, wie aus Fig. 3 ersichtlich, einen Läufer mit Ausgangswelle 150. Diese Ausgangswelle 150 steht über eine Kupplungshülse 152 in drehfester und axialfester Verbindung mit einer Anschlußwelle 154, die durch eine Lageranordnung 155 in dem Getriebeblock 80 gelagert ist. Auf der Anschlußwelle 154 sitzt eine Schnecke 156, die, wie aus Fig. 4 ersichtlich, mit einem Schneckenrad 158 kämmt. Das Schneckenrad 158 sitzt auf einer Querwelle 160, die in dem Getriebeblock 80 durch Wälzlager 162 drehbar gelagert ist. Auf der Querwelle 160 sitzt ferner ein Stirnrad 164, das in Eingriff mit einer an der Pinole angebrachten Zahnstange 166 steht. Durch den rotierenden Axialantriebsmotor 148, der ebenfalls ein AC-Servo-Motor sein kann, kann die Pinole 100 in Richtung der Verschraubungsachse VA hin- und herbewegt werden.

Es ist ohne weiteres ersichtlich, daß durch das Zusammenspiel der beiden Elektromotoren 84 und 148 die verschiedenen Dreh- und Axialbewegungen ausgeführt werden können, die im Zusammenhang mit dem ST-Diagramm gemäß Fig. 7 beschrieben worden sind.

Im Zuge der Beschreibung der Fig. 7 ist darauf hingewiesen worden, daß das Schraubwerkzeug 40 gegen Federkraft nach oben soll ausweichen können, wenn die Klinge 48 gegen die konvexe Oberseite 44 des Schraubenkopfs 42 stößt. Dies sollte aus der vorstehenden Beschreibung der Verschraubungseinrichtung nunmehr klar geworden sein: Wenn die Klinge 48 gegen die konvexe Oberseite der Schraube 12 stößt, so wird die Schraubendruckfeder 138 komprimiert und ihre Vorspannung erhöht. Das Werkzeugaufnahmefutter 118 kann also, wenn die Klinge 48 gegen die konvexe Oberseite 44 des Schraubenkopfs 42 stößt, weiter nach unten gehen, wobei während dieser weiteren Annäherungsbewegung des Werkzeugaufnahmefutters 118 nach unten das Schraubwerkzeug 40 in dem Werkzeugaufnahmefutter gegen die Wirkung der Schraubendruckfeder 138 nach oben verschoben und die Vorspannung der Schraubendruckfeder 138 erhöht wird.

Zu beachten ist dabei folgendes Man kann die Zusammenfassung all derjenigen Teile, die sich bei der Axialbewegungen gemäß den Planquadraten 5C, 5D, 5E und 5F gemeinsam in axialer Richtung bewegen, von einer Axialtreiberbaugruppe sprechen, welche die folgenden Teile umfaßt: den Stopfen 144, den Querstift 146, die rotierende Werkzeugtreiberhülse 94, die Wälzlager 96 und 98, die Distanzhülse 102, die Spannmuttern 104 und 106, die Pinole 100 und das Werkzeugaufnahmefutter 118 mit den zugeordneten Hilfsteilen, nämlich der kappenförmigen Spannmutter 120, den Anschlagkugeln 130 und der Sicherungshülse 136. Diese Teile zusammen führen eine zwangsläufig von der jeweiligen Winkelstellung des elektrischen Axialantriebsmotors abhängige gemeinsame Bewegung aus. Die Masse all dieser Teile muß in axialer Richtung beschleunigt und abgebremst werden, wenn das Drehwerkzeug die Axialbewegungen nach unten gemäß Planquadrat 5C, 5D und 5F ausführt und auch die Axialbewegung nach oben gemäß Planquadrat 5E. Kritisch sind dabei vor allem die Annäherungsbewegungen gemäß Planquadrat 5F. Diese Bewegungen müssen nach einem genau vorgeschriebenen Programm ablaufen, das eingehalten werden muß, um zu verhindern, daß beim Auftreffen des Schraubwerkzeugs 40 auf den Schraubenkopf 42, beim Eingreifen des Schraubwerkzeugs 40 mit der Klinge 48 und beim Einrasten der Klinge 48 in den Schraubwerkzeug-Eingriffsschlitz 62 Beschädigungen eintreten und weiterhin, um zu verhindern, daß beim Zusammentritt des unteren Gewindeendes des Schraubenschafts 46 mit dem oberen Gewindeende der Gewindebohrung 28 an den jeweiligen Gewindegängen Beschädigungen eintreten. Dieses Problem ist bei der erfindungsgemäßen Ausbildung der Verschraubungseinrichtung dadurch wesentlich entschärft, daß das Schraubwerkzeug 40 über den Stempel 142 und den Stempelkopf 140 an der Schraubendruckfeder 138 abgestützt ist. Ein Überschwingen der axial gemeinsam bewegten Teile über eine bestimmte Position hinaus, die zur Einstellung einer bestimmten Position des Schraubwerkzeugs 40 vorgesehen ist, bleibt deshalb unschädlich, weil sie durch eine geringfügige zusätzliche Kompression der Schraubendruckfeder 138 kompensiert wird. Hinzu kommt, daß durch den Eingriff der Schnecke 156 in das Schneckenrad 158 eine mehr oder minder selbsthemmende Bewegungsübertragung von dem rotierenden Axialantriebsmotor 148 auf die gemeinsam axialbewegten Teile stattfindet, so daß schon an dieser Eingriffsstelle ein axiales Überschwingen der axialbewegten Teile und der ihnen antriebsmäßig verbundenen Teile zwischen der Schnecken-Schneckenrad-Paarung 156 und 158 und der Stirnrad-Zahnstangen-Paarung 164, 166 weitgehend unschädlich hinsichtlich Kollisionen zwischen der Schraubwerkzeugklinge 48 und dem Schraubenkopf 42 sowie zwischen dem unteren Ende des Schraubenschaftgewindes und dem oberen Ende des Gewindes der Gewindebohrung 28 sind. Wenn dennoch Überschwingen eintritt, etwa infolge von unvermeidbarem Spiel zwischen den Komponenten der axial gemeinsam bewegten Teile, so wird dieses, wie gesagt, durch die Schraubendruckfeder 138 kompensiert.

Wichtig ist, daß die axial bewegte Masse des Schraubwerkzeugs 40, des Stempels 142 und der Schraubendruckfeder 138 klein ist gegen die übrigen axial bewegten Getriebekomponenten und der mit diesen zur zwangsläufigen gemeinsamen Bewegung verbundenen Teile.

Da für die Axialbewegung des Schraubwerkzeugs 40 entscheidend die axiale Bewegungsvorgabe durch den die Schraubendruckfeder 138 stützenden Stopfen 144 ist, kann man von einer Axialtreiberbaugruppe sprechen, die man sich in dem Stopfen 144 konzentriert vorstellen kann und die in Fig. 1 mit AT bezeichnet ist.

Der die Axialtreiberbaugruppe AT in ihrem jeweiligen Bewegungszustand (zum Bewegungszustand gehört sowohl die jeweilige Position als auch die jeweilige Axialgeschwindigkeit) bestimmende Axialantriebsmotor 148 ist ein AC-Servo-Motor mit elektrischer Steuerung. Dieser Servo-Motor und die Steuerung sind so ausgebildet, daß der Motor mit sehr geringen Verzögerungszeiten, beispielsweise während einer halben Umdrehung, auf eine Nenndrehzahl von beispielsweise 5250 Umdrehungen pro Minute gebracht werden kann und mit ebenso geringer Verzögerung auf Stillstand abgeschaltet werden kann. Außerdem hat dieser Motor nach erreichtem Stillstand ein erhebliches Widerstandsmoment gegen Verdrehung durch äußere Kräfte, z. B. Massenkräfte, die ihn über die erreichte Winkelposition hinaus verdrehen wollen. Es ist ohne weiteres einzusehen, daß mit Hilfe dieser Mittel der Betriebsablauf nach dem ST-Diagramm gemäß Fig. 7 in den Bewegungsphasen der Zeile 5 genau vorgegeben werden kann.

Zu beachten ist auch, daß durch den Axialantriebsmotor 148, die Schnecken-SchneckenradPaarung 156, 158 und die Stirnrad-Zahnstangen-Paarung 164, 166 sowie die Axialtreiberbaugruppe AT der Bewegungsablauf des Stopfens 144 autonom, d.h. unabhängig von der Gewindesteigung des Gewindebolzens 46 und der Gewindebohrung 28 vorgegeben ist. Sollten in den Gewinden des Gewindeschafts 46 und der Gewindebohrung 28 Steigungsfehler auftreten, so werden diese durch eine mehr oder minder große Kompressionsänderung in der Schraubendruckfeder 138 ohne weiteres kompensiert. Vorteilhaft ist dabei, wenn die Schraubendruckfeder so wie in Fig. 1 dargestellt von einer sehr langen und sehr stark komprimierten Schraubendruckfeder mit geringer Federkonstante gebildet ist, die ihre notwendige Federkraft eben nicht aus hoher Federkonstante, sondern aus der hohen Kompression bezieht, so daß bei Änderungen des Kompressionszustands die aus einer Verkürzung oder Verlängerung der Federlänge zwischen dem Stempelkopf 140 und dem Stopfen 144 sich ergeben, die von der Feder ausgeübte Kraft stets annähernd konstant bleibt. Damit ist nämlich sichergestellt, daß die zwischen dem Schraubwerkzeug 40 und der Schraube 12 wirkende Axialkraft unabhängig von etwaigen Steigungsfehlern immer konstant bleibt.

Der elektrische Drehantriebsmotor 84 ist ebenfalls ein AC-Servo-Motor ähnlicher Bauart wie oben für den elektrischen Axialantriebsmotor 148 beschrieben. Er läßt deshalb eine genaue Festlegung der Winkeleinstellung seines Läufers, dargestellt in Form seiner Ausgangswelle 86, zu, und er läßt ferner eine genaue Festlegung der Drehzahl zu, die ja entsprechend den Gewindesteigungen einer bestimmten Axialbewegung der Axialtreiberbaugruppe AT entsprechen muß, damit die autonom vorgegebenen Axialund Drehbewegungen in ihrer Relation der Gewindesteigung in den Gewinden des Schraubenschafts 46 und der Gewindebohrung 28 entsprechen.

Die Eindringtiefe des Gewindeschafts 46 in die Gewindebohrung 28 kann durch die autonome Bewegung der durch eine gemeinsame Steuerung oder wenigstens eine synchronisierte Steuerung gesteuerten Motoren 84 und 148 festgelegt werden einfach dadurch, daß die Axialbewegung und die Drehbewegung zu einem bestimmten Zeitpunkt zum Stillstand kommen. Es ist aber auch denkbar, die Beendigung des eigentlichen Schraubvorgangs entsprechend den Planquadraten 5C und 5D der Fig. 7 beispielsweise aufgrund einer Drehmomenterfassung bei einem vorbestimmten Drehmoment zu Ende zu bringen.

Die elektrischen Motoren 84 und 148 können mit Drehzahl und Winkelpositionrückmeldung arbeiten. Diese Rückmeldung kann innerhalb der Motoren und der ihnen zugeordneten Steuerung erfolgen. Es ist aber auch möglich, Drehweg und Drehzahl außerhalb der Motoren 84 und 148 abzugreifen, z. B. durch Sensoren, die in Fig. 2 bei 168 eingezeichnet sind.

Es wurde weiter oben bereits auf die rotierende Schaltbewegung des Drehtellers 52 hingewiesen, die notwendig ist, um die einzelnen Schrauben 12 von der Übergabestelle 50 in zwei Schritten von jeweils 90° in den Bereich der Verschraubungsachse VA zu bewegen. In Fig. 1 erkennt man, daß der Drehteller 52 durch eine Drehtellerwelle 170 angetrieben ist, welche mittels Wälzlagern 172 in dem Getriebeblock 80 drehbar gelagert ist. Auf der Drehtellerwelle 170 sitzt ein Kupplungsrad 174, welches in Kupplungseingriff mit einem auf der Werkzeugtreiberhülse 94 festgemachten Kupplungsrad 176 steht. Wenn das Schraubwerkzeug 40 seine Werkzeugrückzugsstellung WRS gemäß Fig. 6 einnimmt, so ist, wie aus Fig. 1 zu ersehen, das Kupplungsrad 176 in Kupplungseingriff mit dem Kupplungsrad 174. Dies bewirkt eine Drehung des Drehtellers in den Planquadraten 4E und 4Ff zwischen den Maschinenwinkeln 240° und 320° der Antriebseinrichtungen 38 von Fig. 8, eine Drehbewegung, die, wie schon ausgeführt, nur stattfinden kann, wenn entsprechend den Planquadraten 5E und 5F im Maschinenwinkelbereich zwischen 240° und 320° das Schraubwerkzeug 40 sich in der Rückzugsstellung WRS gemäß Fig. 6 befindet. Die Fig. 7 zeigt dabei, daß es gelungen ist, die Zuführung der Schrauben durch den Drehteller gemäß den Planquadraten 4E und 4F auf denjenigen Drehwinkel der Antriebseinrichtungen 38 der Fig. 8 zu beschränken, der, wie die Planquadrate 2E und 2F zeigen, ohnehin notwendig ist, um die Klemmstücke 14 in Fluchtungsstellung mit der Verschraubungsachse VA zu bringen und wieder herauszutransportieren. Dies ist auch eine Konsequenz aus der erfindungsgemäßen Unterteilung des Zuführwegs der Schrauben 12 aus der Schraubenversorgungseinheit 34 in zwei Abschnitte, nämlich die der Verschraubungsachse VA nähere Zuführwegstrecke ZW1, die von den Nestern 56 in jeweils zwei Schaltschritten durchlaufen wird, und die der Verschraubungsachse fernere Zuführwegstrecke ZW2, die von dem Rohr 32 gebildet ist. Die Zuführwegstrecke ZW1 kann streng im Maschinentakt befahren werden, unabhängig von Geschwindigkeitsschwankungen in der Zuführwegstrecke ZW2, so daß der Schraubentransport in der Zuführwegstrecke ZW1 ohne weiteres in das Ablaufprogramm gemäß Fig. 7 eingegliedert werden kann.

Wie aus Fig. 5 ersichtlich, kann in der Stellung, welcher die Nester 56 jeweils zwischen der Übergabestation 50 und dem Bereich der Verschraubungsachse VA einnehmen, eine Beobachtungseinrichtung 178 vorgesehen sein. In dieser Beobachtungsstation 178 befindet sich beispielsweise eine Fernsehkamera 180, welche die jeweils von einem Nest 56 gehaltene Schraube erfaßt und mit dem Soll-Bild einer elektronisch gespeicherten Schraube vergleicht. Sobald Abweichungen festgestellt werden, die zu einem unbefriedigenden Arbeitsergebnis der Verschraubung führen können, wird durch einen der Fernsehkamera 180 nachgeschalteten Auswertungscomputer ein Befehl an die übergeordnete Montagemaschine 10 gegeben dahingehend, daß das mit fehlerhafter Schraube ausgeführte Endprodukt ausgeworfen wird.

Zum Aufbau des Getriebeblocks ist noch nachzutragen, daß die mit dem rotierenden Drehantriebsmotor 84 rotierenden Teile, nämlich die Anschlußwelle 90, der Polygonstab 92, die Werkzeugtreiberhülse 94, das Werkzeugaufnahmefutter 118 mit den Hilfsteilen kappenförmige Spannmutter 120, Anschlagkugeln 130 und Sicherungshülse 136 eine rotierende Werkzeugtreiber-Baugruppe RT bilden. Diese rotierende Werkzeugtreiber-Baugruppe RT kann verhältnismäßig schwungmomentarm ausgeführt sein, da sie mit ihren wesentlichen Teilen radial innerhalb der Pinole 100 untergebracht ist.

Bei der Beschreibung des Betriebsablaufs anhand der Fig. 7 wurde davon ausgegangen, daß beim Auftreffen des Schraubwerkszeugs mit der Klinge 48 auf der Oberseite 44 des Schraubenkopfs 42 durch rechtzeitige Beendigung der axialen Annäherungsbewegung der Axialtreiberbaugruppe AT nur eine relativ geringfügige Kompression der Schraubendruckfeder 138 eintritt, ausreichend eben, um eine Wegreserve für das Schraubwerkzeug 40 bereitzustellen, die ausreicht, um nach Herstellung der Überdeckung von Klinge 48 und Schraubwerkzeug-Eingriffsschlitz 62 die Klinge 48 zur Drehmomentübertragung in den Werkzeug-Eingriffsschlitz 62 einrasten zu lassen. Es wurde weiter davon ausgegangen, daß die axiale Bewegung des Schraubwerkzeugs während des eigentlichen Schraubvorgangs entsprechend den Planquadraten 4C, 4D und 5C, 5D stattfindet, indem während dieser Phase die Axialtreiberbaugruppe AT laufend abwärts bewegt wird und damit während der ganzen Verschraubungsphase eine annähernd konstante Länge der Schraubendruckfeder 138 aufrechterhalten wird. In Fig. 9 ist eine Abwandlung zur Ausführungsform der Fig. 1 dargestellt, in der analoge Teile mit gleichen Bezugszeichen versehen sind, wie in Fig. 1 jeweils ergänzt durch den Buchstaben a. Im Unterschied zu der Ausführungsform nach Fig. 1 ist eine wesentlich größere Länge der Schraubendruckfeder 138a vorgesehen. Bei dieser Ausführungsform kann man in Abwandlung gegenüber dem Betriebsablauf gemäß Fig. 7 die Axialtreiberbaugruppe AT schon vor Beginn der eigentlichen Verschraubungsbewegung soweit nach unten vorrücken lassen, daß die Schraubendruckfeder 138a um eine dem gesamten axialen Schraubungsweg entsprechend dem Abstand zwischen VVS und VES entsprechende Längendifferenz verkürzt wird. In diesem Falle steht die Axialtreiberbaugruppe AT während des eigentlichen Verschraubungsvorgangs in axialer Richtung still und der für die Verschraubung notwendige Axialvorschub des Schraubwerkzeugs 40a wird durch Längsexpansion der Schraubendruckfeder 138a erzwungen. Hier ist es besonders wichtig, daß die Schraubendruckfeder 138a in jeder Längeneinstellung eine annähernd konstante Vorspannkraft liefert, was wiederum dadurch erreicht werden kann, daß die Schraubendruckfeder 138a im entspannten Zustand sehr viel länger ist als in Fig. 9 dargestellt und durch Einspannung zwischen dem Schraubwerkzeug 40a und dem Stopfen auf die in Fig. 9 erscheinende Länge verkürzt ist.

In der Fig. 6 sind die den Stellungen VVS (Verschraubungsvorbereitungsstellung), GES (Gewindeeinfaßstellung) und VES (Verschraubungsendstellung) der Schraube 12 entsprechenden Stellungen des Werkzeugs zusätzlich eingetragen und mit WVVS bzw. WGES bzw. WVES bezeichnet und den jeweiligen Niveaulinien zugeordnet, welche die Stellungen VVS, GES und VES der Schraube 42, damit aber auch die Stellungen WVVS, WGES und WVES des Schraubwerkzeugs 40 charakterisieren.

In Fig. 1 ist der elektrische Drehantriebsmotor 84 zusammen mit seiner Ausgangswelle 86 durch das übergeordnete Bezugszeichen RA bezeichnet, welches für rotierenden Werkzeugantrieb steht, während der Axialbewegungsmotor 148 in Fig. 1 und insbesondere in Fig. 3 mit dem übergeordneten Bezugszeichen AA versehen ist, welches für Axialbewegungsantrieb steht und neben dem Axialbewegungsmotor 148 das Bewegungsumwandlungsgetriebe BUG gemäß Fig. 2 umfaßt, welches seinerseits von der Schnecken-Schneckenrad-Kombination 156, 158 und der Stirnrad-Zahnstangen-Kombination 164, 168 sowie der Querwelle 106 gebildet ist.

Ferner ist in Fig. 1 die von dem Werkzeugaufnahmefutter 118, der kappenförmigen Spannmutter 120, den Anschlagkugeln 130 und der Sicherungshülse 126 gebildete Baugruppe mit dem übergeordneten Bezugszeichen EXU (EXU = austauschbare Baueinheit) bezeichnet. Weiter ist die aus der Kompressionsfeder 138, dem Stempel 142 und dem Stempelkopf 140 zusammengesetzte, insgesamt gefederte Baugruppe als GAV bezeichnet, was für Axialankupplungsmittel steht.

Da die Schrauben 12 mit undefinierter Winkellage ihres Werkzeug-Eingriffsschlitzes 62 durch das Rohr 32 zugeführt werden und diese undefinierte Winkellage des Werkzeug-Eingriffsschlitzes 62 auch noch in der Verschraubungsvorbereitungsstellung VVS gemäß Fig. 6 besteht, der Eingriff der Klinge 48 in den Werkzeug-Eingriffsschlitz 62 also erst durch die Suchbewegung des Schraubwerkzeugs entsprechend der Drehbewegung des Schraubwerkzeugs im Planquadrat 4F zwischen 350° und 360° des Maschinenwinkels herbeigeführt wird, ist auch dann, wenn das Drehwerkzeug während der eigentlichen Verschraubungsphase einen konstanten Drehweg von beispielsweise 17,5 Umdrehungen (Planquadrat 4A) ausführt, die Drehstellung des Schraubwerkzeugs 40 nach Beendigung der eigentlichen Verschraubungsphase unbestimmt. Dies hat zur Folge, daß nach Beendigung der eigentlichen Verschraubungsphase, wenn die rotierende Werkzeugtreiber-Baugruppe RT mit der Axialantriebsbaugruppe AT wieder nach oben fährt, um das Schraubwerkzeug 40 in die Werkzeugrückzugsstellung WRS zu bringen, das Kupplungsrad 176 nicht zwangsläufig in Kupplungseingriff mit dem Kupplungsrad 174 trifft, sondern Zahn gegen Zahn stoßen kann. Um dies zu verhindern, ist dafür Sorge getragen, daß während des Rückhubs der Axialtreiberbaugruppe AT eine Korrekturdrehung der Werkzeugtreiber-Baugruppe RT stattfindet. Diese Korrekturbewegung entspricht dem Vorgang, der im Planquadrat 4E zwischen 200° und 215° dargestellt ist. Die Steuerung weiß aufgrund von Drehwegmessung während des Abwärtshubs, welcher Korrekturdrehwinkel erforderlich ist, um die Kupplungsräder 174 und 176 wieder in Kupplungseingriff bringen zu können und bemißt danach die Korrekturdrehung, die zwischen 200° und 215° im Planquadrat 4E stattfindet und sich jeweils nur über einen Bruchteil der Zahnteilung erstreckt.

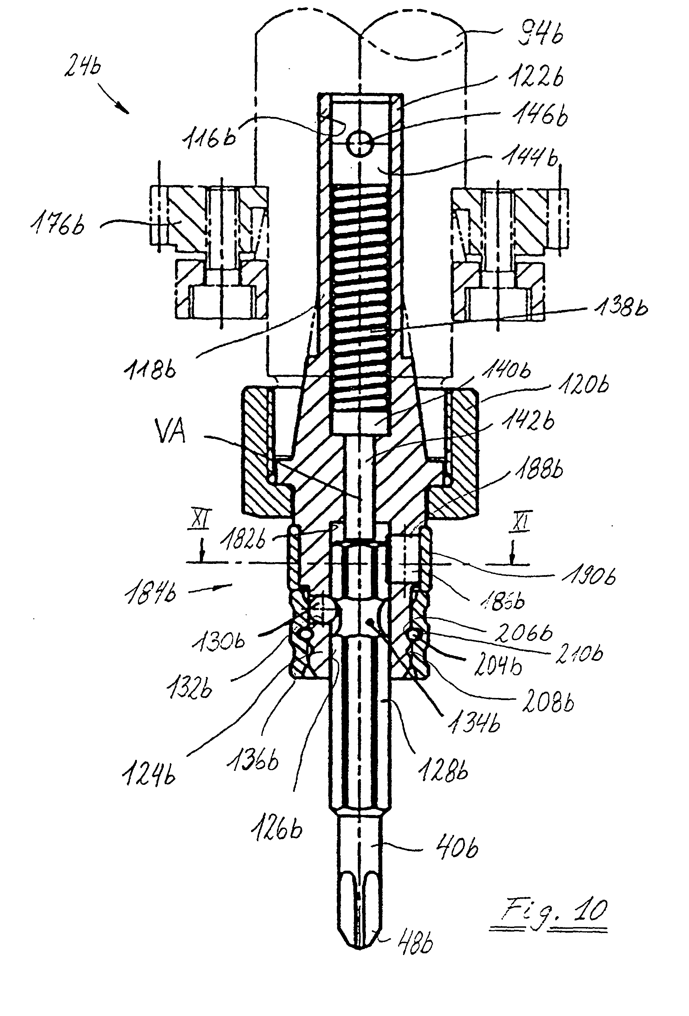

Nachdem vorstehend zur Erläuterung des technlogischen Hintergrundes der vorliegenden Erfindung eine Verschraubungseinrichtung beschrieben worden, wie sie aus der DE 197 09 495 A1 bekannt ist, soll nunmehr anhand der Fig. 10 - 13 aufgezeigt werden, wie ein derartiger Hochgeschwindigkeits-Schraubautomat mit einer Drehmomentkupplung ausgestattet werden kann, welche trotz der hohen im Betrieb des Schraubautomaten auftretenden Winkelbeschleunigungen ein niedriges Auslösedrehmoment aufweist.

Die Verschraubungseinrichtung 24b gemäß Fig. 10 entspricht in der oberen Hälfte von Fig. 10, d.h. bis etwa zur Höhe der Unterkante der Spannmutter 120b identisch der vorstehend erläuterten Verschraubungseinrichtung 24 gemäß Fig. 1 - 8. Die den Bezugszeichen 94b, 176b, 140b, 142b, 138b, 144b, 146b, 116b, 118b, 122b und 120b zugeordneten Elemente bzw. Elemententeile brauchen daher hier nicht erneut erläutert zu werden. Auch die Sicherung des Werkzeugs 40b in der Werkzeugaufnahme 126b durch Eingriff von in Radialbohrungen 132b aufgenommenen Kugeln 130b in eine Einschnürung 134b des Schafts 128b des Werkzeugs 40b und Sichern der Kugeln mittels einer Sicherungshülse 136b ist von der Verschraubungseinrichtung 24 her bekannt. Diesbezüglich sei auf die vorstehende Beschreibung der Verschraubungseinrichtung 24 verwiesen.

Der einzige Unterschied der Verschraubungseinrichtung 24b gegenüber der Verschraubungseinrichtung 24 besteht darin, daß im Bereich des unteren Endes 124b des Werkzeugaufnahmefutters 118b, genauer gesagt im Bereich des oberen Endes 182b der Werkzeugaufnahme 126b eine Drehmomentkupplung 184b vorgesehen ist. Hierzu ist die Werkzeugaufnahme 126b als Rundkanal ausgebildet, so daß sich das Werkzeug 40b relativ zum Werkzeughalter 118b frei um die Verschraubungs- bzw. Drehachse VA drehen kann.

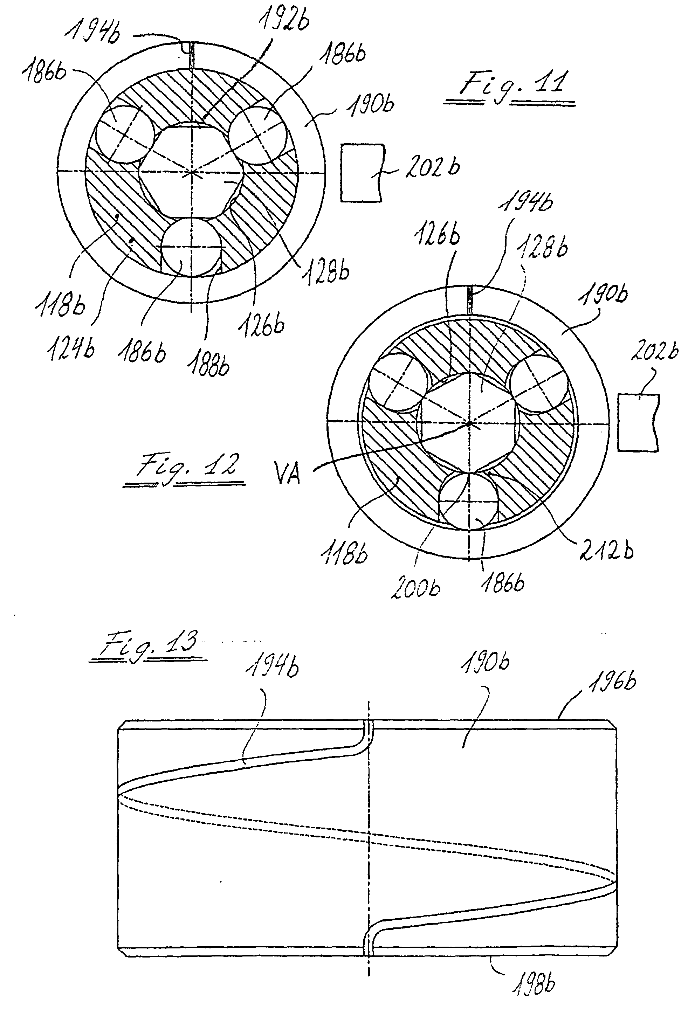

Aufbau und Funktion der Drehmomentkupplung 184b sollen im folgenden anhand der Fig. 11 und 12 näher erläutert werden:

Die Drehmomentkupplung 184b umfaßt in der dargestellten Ausführungsform drei Wälzkörper 186b, beispielsweise Rollen oder Tönnchen, welche in Radialausnehmungen 188b des unteren Endes 124b des Werkzeughalters 118b frei drehbar aufgenommen sind. Eine Spannhülse 190b spannt die Wälzkörper 186b in Eingriff mit der hexagonalen Außenfläche des Werkzeugschafts 128b vor und ermöglicht so die Übertragung eines von einem Antriebsmotor auf den Werkzeughalter 118b ausgeübten Drehmoments von diesem Werkzeughalter 118b über die Wälzkörper 186b auf das Werkzeug 40b.

Die Spannhülse 190b weist gemäß Fig. 13 einen Schlitz 194b auf, der sich zwischen den beiden axialen Ende 196b und 198b längs einer Schraubenlinie über einen Umfangswinkel von 360° erstreckt. Infolge dieser Ausbildung liegen bei einer radialen Aufweitung bzw. Dehnung der Spannhülse 190b in jedem Umfangswinkelabschnitt im wesentlichen die gleichen Verformungs- und Federkraftverhältnisse vor. Dies stellt sicher, daß die Spannhülse 190b bei einer Aufweitung durch die Wälzkörper 186b jeden dieser Wälzkörper mit im wesentlichen der gleichen Kraft gegen die jeweilige Angriffsfläche 192b des hexagonalen Außenumfangs des Werkzeugschafts 128b andrückt. Die Spannhülse 190b verfügt bevorzugt über eine mit zunehmender Aufweitung ansteigende Federcharakteristik.

Festzuhalten ist, daß in der in Fig. 11 dargestellten Stellung zwischen Spannhülse 190b, Wälzkörpern 186b und Werkzeugschaft 128b ein Spiel von wenigen hundertstel Millimetern vorhanden sein kann, so daß sich das Werkzeug 40b in einem drehmomentübertragungs-freien Zustand innerhalb eines vorbestimmten Winkelbereichs frei in der Werkzeugaufnahme 126b drehen kann. Dieses Spiel erleichtert das ordnungsgemäße Einführen der Klinge 48b des Schraubwerkzeugs 40b in den Schraubschlitz eines Schraubbolzens.

Festzuhalten ist ferner, daß die Antriebsseite der erfindungsgemäßen Drehmomentkupplung 184b vom Werkzeughalter 118b und die Abtriebsseite vom Werkzeug 40b gebildet werden. Die Drehmomentkupplung 184b hat also lediglich im funkitionalen Sinne An- bzw. Abtriebsseiten. Im konstruktiven Sinne besteht sie lediglich aus den Wälzkörpern 186b und der Spannhülse 190b.

Ist der Schraubbolzen vollständig in die zugehörige Gewindebohrung eingeschraubt worden, so kommt er und mit ihm das Werkzeug 40b zum Stillstand. Dennoch versucht der Antriebsmotor zunächst, das Werkzeug 40b weiterzudrehen. Infolge der hieraus resultierenden Relativdrehung von Werkzeugaufnahme 118b und Werkzeug 40b bewegen sich die Wälzkörper 186b längs der Angriffsfläche 192b des hexagonalen Werkzeugschafts 128b, was letzenendes zu einer Bewegung der Wälzkörper 186b entgegen der Vorspannung der Spannhülse 190b nach radial außen führt. Die ansteigende Federcharakteristik der Spannhülse 190b und das hieraus resultierende höhere übertragbare Drehmoment der Drehmomentkupplung 184b sorgen in diesem Endstadium des Verschraubungsvorgangs für ein allmähliches Nachziehen des Schraubbolzens.

Hat die Drehmomentkupplung den in Fig. 12 dargestellten Auslösezustand erreicht, in welchem die Wälzkörper 186b auf den Kantlinien 200b des Werkzeugschafts 128b aufliegen, so hat das zwischen der Antriebsseite und der Abtriebsseite der Drehmomentkupplung 184b übertragbare Drehmoment seinen maximalen Wert erreicht. Bei weiterer Relativverdrehung von Werkzeughalter 118b und Werkzeug 40b nähern sich die Wälzkörper 186b unter der Vorspannung der Spannhülse 190b wieder der Drehachse VA an, womit eine Abnahme des übertragbaren Drehmoments einhergeht. Auf diese Weise kann sichergestellt werden, daß die Schraubbolzen mit dem Auslösedrehmoment der Drehmomentkupplung 184b, d.h. dem von dieser maximal übertragbaren Drehmoment, angezogen werden.

Die Aufweitung der Spannhülse 190b wird mittels eines beispielsweise induktiv arbeitenden Näherungssensors 202b erfaßt. Ein entsprechendes Erfassungssignal wird einer in den Fig. 10 - 13 nicht dargestellten Steuereinheit zugeführt, welche auch mit der Ausführung des vorstehend erläuterten vorbestimmten Programmablaufs betraut ist. Auf Grundlage dieses Erfassungssignales schaltet die Steuereinheit den Antriebsmotor ab, so daß der Werkzeughalter 118b rasch zum Stillstand kommt, vorzugsweise noch bevor die Wälzkörper 186b die nächste Kantlinie 200b des Werkzeugschafts 128b erreicht haben. Dieses zügige, einen unnötigen Verschleiß der Kantlinien 200b vermeidende Abschalten des Motors wird dadurch erleichtert, daß die Angriffsflächen 192b des Werkzeugschafts 128b eine Winkelerstreckung von 60° aufweisen, d.h. eine nutzbare Winkelerstreckung zwischen den Linien minimalen bzw. maximalen Abstands von der Drehachse VA von 30°, aufweisen.

Für einen geringen Verschleiß des Werkzeugschafts 128b ist ferner von Bedeutung, daß das Drehmoment mittels Elementen übertragen wird, welche sich beim Auslösen der Drehmomentkupplung 184b an den Angriffsfläche 192b und den Kantlinien 200b des Werkzeugschafts 128b abwälzen und nicht an diesen entlanggleiten.

Gemäß Fig. 10 ist die Spannhülse 190b an dem Werkzeugschaft 128b mittels der gleichen Sicherungshülse 136b gesichert, welche auch für das Halten des Werkzeugs 40b in der Werkzeugaufnahme 126b verantwortlich ist. In der Darstellung gemäß Fig. 10 befindet sich die Sicherungshülse 136b in ihrer Werkzeughaltestellung, in welcher sie durch Zusammenwirken einer Hülsen-seitigen Nut 210b, einer Werkzeughalter-seitigen Nut 206b und eines Gummirings 204b gehalten ist. Am Werkzeughalter 118b ist ferner eine Nut 208b vorgesehen, welche in Zusammenwirken mit der Hülsen-seitigen Nut 210 und dem Gummiring 204b eine Werkzeugfreigabestellung der Sicherungshülse 136b definiert. Zieht man die Sicherungshülse 136b schließlich vollständig vom Werkzeughalter 118b ab, so kann die Spannhülse 190b ausgetauscht werden.

Bei abgezogener Sicherungshülse 136b und abgezogener Spannhülse 190b werden die Wälzkörper 186b und die Kugeln 130b allein durch die Wirkung von Schmierfett in den Ausnhemungen 132b bzw. 188b des Werkzeughalters 116b gehalten. Gegen ein Hineinfallen in die Werkzeugaufnahme 126b sind die Wälzkörper 186b durch Anschläge 212b (siehe Fig. 12) gesichert, die von Verjüngungen der Ausnehmungen 188b gebildet sind. Auch die Kugeln 130b können auf die gleiche Art und Weise nach radial innen hin gesichert werden.

Abschließend soll nochmals ausdrücklich darauf hingewiesen werden, daß bei der erfindungsgemäßen Anordnung und Ausbildung der Drehmomentkupplung 184b das abtriebsseitig der Drehmomentkupplung vorhandene Trägheitsmoment einzig und allein das Trägheitsmoment des Werkzeugs ist. Bei einem Schrauberbit mit einer Schlüsselweite von 1/4 Zoll und einer Läange von etwa 50 mm beträgt das Trägheitsmoment beispielsweise weniger als 0,5 g·cm². Ein derartig geringes Trägheitsmoment könnte allenfalls noch durch Konstruktion eines Werkzeugs mit integrierter Drehmomentkupplung unterschritten werden.

## Patentansprüche

1. Werkzeugmaschine (24b) umfassend:
- einen Werkzeughalter (118b) zur Aufnahme eines Werkzeuges (40b),
- einen Antriebsmotor zur Herbeiführung einer Drehbewegung des Werkzeughalters (118b),
- eine Drehmomentkupplung (184b) in dem Antriebsstrang zwischen Antriebsmotor und Werkzeug (40b),
wobei die Drehmomentkupplung (184b) wenigstens ein Drehmomentübertragungselement (186b) zur Drehmomentübertragung zwischen Antriebsseite und Abtriebsseite der Drehmomentkupplung (184b) und eine mit dem Drehmomentübertragungselement (186b) in Wirkverbindung stehende Federanordnung (190b) aufweist, entgegen deren Spannwirkung das Drehmomentübertragungselement (186b) vom Drehmomentübertragungszustand in einen Auslösezustand ausweichen kann, um die Drehmomentkupplung (184b) bei Erreichen des Auslöse-Drehmomentes auszulösen,
**dadurch gekennzeichnet, dass** die Drehmomentkupplung (184b) abtriebsseitig mit dem Drehmomentübertragungselement (186b) unmittelbar an dem Werkzeug (40b) angreift.

2. Werkzeugmaschine nach Anspruch 1,
**dadurch gekennzeichnet, daß** das Gesamtträgheitsmoment der Abtriebsseite der Drehmomentkupplung (184b) einschließlich des Werkzeugs (40b) weniger als 250 g·cm², vorzugsweise weniger als 25 g·cm², noch bevorzugter weniger als 2,5 g·cm², beträgt.

3. Werkzeugmaschine nach einem der vorhergehenden Ansprüche,
**dadurch gekennzeichnet, daß** die Federanordnung (190b) mit dem wenigstens einen Drehmomentübertragungselement (186b) erst nach einer vorbestimmten Relativverdrehung von Antriebsseite und Abtriebsseite der Drehmomentkupplung (184b) in Wirkverbindung tritt.

4. Werkzeugmaschine nach einem der Ansprüche 1 bis 3,
**dadurch gekennzeichnet, daß** das von der Antriebsseite der Drehmomentkupplung (184b) auf deren Abtriebsseite übertragbare Drehmoment bei einer Relativverdrehung der beiden Seiten zumindest in einem vorbestimmten Relativverdrehungs-Winkelbereich mit zunehmendem Relativverdrehungs-Winkel ansteigt.

5. Werkzeugmaschine nach Anspruch 4,
**dadurch gekennzeichnet, daß** die Federanordnung (190b) eine mit zunehmendem Relativverdrehungs-Winkel ansteigende Federcharakteristik aufweist.

6. Werkzeugmaschine nach einem der Ansprüche 3 bis 5,
**dadurch gekennzeichnet, daß** das wenigstens eine Drehmomentübertragungselement (186b) mit einer Angriffsfläche (192b) des Werkzeugs (40b) zusammenwirkt, welche mit ansteigendem Relativverdrehungs-Winkel zwischen Antriebsseite und Abtriebsseite der Drehmomentkupplung (184b) das Drehmomentübertragungselement (186b) zunehmend auf die Federanordnung (190b) zu drängt.

7. Werkzeugmaschine nach Anspruch 6,
**dadurch gekennzeichnet, daß** sich die mit dem Drehmomentübertragungselement (186b) zusammenwirkende Angriffsfläche (192b) des Werkzeugs (40b) über einen Relativverdrehungs-Winkelbereich von wenigstens 20°, vorzugsweise wenigstens 30°, erstreckt.

8. Werkzeugmaschine nach einem der vorhergehenden Ansprüche,
**dadurch gekennzeichnet, daß** das wenigstens eine Drehmomentübertragungselement von einem Wälzkörper (186b) gebildet ist.

9. Werkzeugmaschine nach einem der vorhergehenden Ansprüche,
**dadurch gekennzeichnet, daß** sich das wenigstens eine Drehmomentübertragungselement (186b) bei einer Relativverdrehung von Antriebsseite und Abtriebsseite der Drehmomentkupplung (184b) im wesentlichen in radialer Richtung bewegt.

10. Werkzeugmaschine nach einem der Ansprüche 1 bis 9,
**dadurch gekennzeichnet, daß** das Werkzeug (40b) in einer kreiszylindrischen Ausnehmung (126b) des Werkzeughalters (118b) lösbar aufgenommen ist.

11. Werkzeugmaschine nach einem der Ansprüche 1 bis 10,
**dadurch gekennzeichnet, daß** das wenigstens eine Drehmomentübertragungselement (186b) in einer Ausnehmung (188b) des Werkzeughalters (118b) aufgenommen ist, wobei die Ausnehmung (188b) vorzugsweise wenigstens einen inneren Anschlag (212b) für das Drehmomentübertragungselement (186b) aufweist.

12. Werkzeugmaschine nach einem der Ansprüche 1 bis 11,
**dadurch gekennzeichnet, daß** wenigstens drei Drehmomentübertragungselemente (186b) gleichmäßig über dem Umfang des Werkzeughalters (118b) verteilt angeordnet sind.

13. Werkzeugmaschine nach einem der Ansprüche 1 bis 12,
**dadurch gekennzeichnet, daß** die Federanordnung eine vorzugsweise im wesentlichen kreiszylindrische Spannhülse (190b) umfaßt.

14. Werkzeugmaschine nach Anspruch 13,
**dadurch gekennzeichnet, daß** die Spannhülse (190b) einen zwischen den beiden axialen Hülsenenden (196b, 198b) durchgehend verlaufenden Schlitz (194b) aufweist.

15. Werkzeugmaschine nach Anspruch 14,
**dadurch gekennzeichnet, daß** der Schlitz (194b) im wesentlichen längs einer Schraubenlinie verläuft.

16. Werkzeugmaschine nach Anspruch 14 oder 15,
**dadurch gekennzeichnet, daß** der Schlitz (194b) sich über einen Umfangswinkel erstreckt, der ein ganzzahliges Vielfaches von 360° beträgt.

17. Werkzeugmaschine nach einem der Ansprüche 13 bis 16,
**dadurch gekennzeichnet, daß** das maximal übertragbare Drehmoment durch entsprechende Wahl der Wandstärke oder/und des Materials der Spannhülse (190b) einstellbar ist.

18. Werkzeugmaschine nach einem der Ansprüche 13 bis 17,
**dadurch gekennzeichnet, daß** die Spannhülse (190b) an dem Werkzeughalter (118b) mittels einer Sicherungshülse (136b) gesichert ist.

19. Werkzeugmaschine nach Anspruch 18,
**dadurch gekennzeichnet, daß** die Sicherungshülse (136b) das Werkzeug (40b) in dem Werkzeugzeughalter (118b) axial sichert.

20. Werkzeugmaschine nach Anspruch 18 oder 19,
**dadurch gekennzeichnet, daß** die Sicherungshülse (136b) an dem Werkzeughalter (118b) zwischen einer Werkzeugsicherungstellung und einer Werkzeugfreigabestellung verschiebbar angeordnet ist.

21. Werkzeugmaschine nach Anspruch 20,
**dadurch gekennzeichnet, daß** der Sicherungshülse (136b) Sicherungselemente (130b) zugeordnet sind, welche Durchbrechungen (132b) des Werkzeughalters (118b) durchsetzen und in der Werkzeugsicherungsstellung in eine am Außenumfang des Werkzeugs (40b) vorgesehene Halterungsnut (134b) eingreifen.

## Claims

1. Machine tool (24b) comprising:
- a tool holder (118b) for receiving a tool (40b),
- a drive motor for bringing about a rotary movement of the tool holder (118b),
- a torque coupling (184b) in the power train between drive motor and tool (40b),
the torque coupling (184b) comprising at least one torque transmitting element (186b) for torque transmission between drive side and output side of the torque coupling (184b) and a spring arrangement (190b) interacting with the torque transmitting element (186b), counter to the tensioning effect of which spring arrangement the torque transmitting element (186b) can yield into a release state from the torque transmitting state in order to release the torque coupling (184b) on reaching the release torque, **characterised in that** the torque coupling (184b) acts directly on the tool (40b) on the output side with the torque transmitting element (186b).

2. Machine tool according to claim 1, **characterised in that** the overall moment of inertia of the output side of the torque coupling (184b), including the tool (40b), is less than 250 g.cm², preferably less than 25 g.cm², and even more preferably less than 2.5 g.cm².

3. Machine tool according to any of the preceding claims, **characterised in that** the spring arrangement (190b) interacts with the at least one torque transmitting element (186b) only after a predetermined relative torsion of drive side and output side of the torque coupling (184b).

4. Machine tool according to any of claims 1 to 3, **characterised in that** the torque transmittable from the drive side of the torque coupling (184b) to the output side thereof increases, on a relative torsion of the two sides, at least in a predetermined relative torsion angular range, with increasing relative torsion angle.

5. Machine tool according to claim 4, **characterised in that** the spring arrangement (190b) has a spring characteristic increasing with increasing relative torsion angle.

6. Machine tool according to any of claims 3 to 5, **characterised in that** the at least one torque transmitting element (186b) cooperates with a working surface (192b) of the tool (40b), which surface increasingly presses the torque transmitting element (186b) onto the spring arrangement (190b) with increasing relative torsion angle between drive side and output side of the torque coupling (184b).

7. Machine tool according to claim 6, **characterised in that** the working surface (192b) of the tool (40b) cooperating with the torque transmitting element (186b) extends over a relative torsion angular range of at least 20°, preferably at least 30°.

8. Machine tool according to any of the preceding claims, **characterised in that** the at least one torque transmitting element is formed by a rolling body (186b).

9. Machine tool according to any of the preceding claims, **characterised in that** the at least one torque transmitting element (186b) moves substantially in the radial direction on a relative torsion of drive side and output side of the torque coupling (184b).

10. Machine tool according to any of claims 1 to 9, **characterised in that** the tool (40b) is detachably received in a circular cylindrical recess (126b) of the tool holder (118b).

11. Machine tool according to any of claims 1 to 10, **characterised in that** the at least one torque transmitting element (186b) is received in a recess (188b) of the tool holder (118b), the recess (188b) preferably comprising at least one inner stop (212b) for the torque transmitting element (186b).

12. Machine tool according to any of claims 1 to 11, **characterised in that** at least three torque transmitting elements (186b) are uniformly distributed over the periphery of the tool holder (118b).

13. Machine tool according to any of claims 1 to 12, **characterised in that** the spring arrangement comprises a preferably substantially circular cylindrical clamping sleeve (190b).

14. Machine tool according to claim 13, **characterised in that** the clamping sleeve (190b) comprises a slot (194b) running continuously between the two axial sleeve ends (196b, 198b).

15. Machine tool according to claim 14, **characterised in that** the slot (194b) substantially runs along a screwing line.

16. Machine tool according to claim 14 or 15, **characterised in that** the slot (194b) extends over a circumferential angle which is an integral multiple of 360°.

17. Machine tool according to any of claims 13 to 16, **characterised in that** the maximum transmittable torque can be adjusted by appropriate choice of the wall thickness and/or the material of the clamping sleeve (190b).

18. Machine tool according to any of claims 13 to 17, **characterised in that** the clamping sleeve (190b) is secured on the tool holder (118b) by means of a securing sleeve (136b).

19. Machine tool according to claim 18, **characterised in that** the securing sleeve (136b) axially secures the tool (40b) in the tool holder (118b).

20. Machine tool according to claim 18 or 19, **characterised in that** the securing sleeve (136b) is displaceably arranged on the tool holder (118b) between a tool securing position and a tool release position.

21. Machine tool according to claim 20, **characterised in that** securing elements (130b) are associated with the securing sleeve (136b) which penetrate through-apertures (132b) of the tool holder (118b) and engage in the tool securing position in a retaining groove (134b) provided on the outer circumference of the tool (40b).

## Revendications

1. Machine-outil (24b), comprenant :
- un porte-outil (118b) pour recevoir un outil (40b),
- un moteur d'entraînement pour provoquer une rotation du porte-outil (118b),
- un embrayage couple (184b) dans la chaîne de transmission entre le moteur de commande et l'outil (40b),
l'embrayage couple (184b) présentant au moins un élément de transmission de couple (186b) pour transmettre un couple entre le côté entrée et le côté sortie de l'embrayage couple (184b) et un ensemble de ressorts (190b) se trouvant en relation active avec l'élément de transmission de couple (186b), l'élément de transmission de couple (186b) pouvant éviter l'effet de serrage de cet ensemble en passant de l'état de transmission de couple à un état de dégagement pour dégager l'embrayage couple (184b) lorsque le couple de dégagement est atteint,
**caractérisée en ce que** l'embrayage couple (184b) côté sortie est appliqué avec l'élément de transmission de couple (186b) directement à l'outil (40b).

2. Machine-outil selon la revendication 1, **caractérisée en ce que** le moment d'inertie total du côté sortie de l'embrayage couple (184b), y compris l'outil (40b), s'élève à moins de 250 g·cm², de préférence à moins de 25 g·cm², de façon encore plus préférée à moins de 2,5 g·cm².

3. Machine-outil selon l'une des revendications précédentes, **caractérisée en ce que** l'ensemble de ressorts (190b) n'entre dans une relation active avec ledit au moins un élément de transmission de couple (186b) qu'après une torsion relative prédéterminée du côté entrée et du côté sortie de l'embrayage couple (184b).

4. Machine-outil selon l'une des revendications 1 à 3, **caractérisée en ce que** lors d'une torsion relative des deux côtés, le couple transmissible du côté entrée de l'embrayage couple (184b) à son côté sortie augmente au moins dans une plage angulaire de torsion relative avec un angle croissant de torsion relative.

5. Machine-outil selon la revendication 4, **caractérisée en ce que** l'ensemble de ressorts (190b) présente une caractéristique de ressort augmentant avec un angle croissant de torsion relative.

6. Machine-outil selon l'une des revendications 3 à 5, **caractérisée en ce que** ledit au moins un élément de transmission de couple (186b) coopère avec une surface d'application (192b) de l'outil (40b) qui pousse l'élément de transmission de couple (186b), de plus en plus vers l'ensemble de ressorts (190b) avec un angle de torsion relative croissant entre le côté entrée et le côté sortie de l'embrayage couple (184b).

7. Machine-outil selon la revendication 6, **caractérisée en ce que** la surface d'application (192b) de l'outil (40b) coopérant avec l'élément de transmission de couple (186b) s'étend sur une plage angulaire de torsion relative d'au moins 20°, de préférence au moins 30°.

8. Machine-outil selon l'une des revendications précédentes, **caractérisée en ce que** ledit au moins un élément de transmission de couple se compose d'un noyau de cylindre (186b).

9. Machine-outil selon l'une des revendications précédentes, **caractérisée en ce que** lors d'une torsion relative du côté entrée et du côté sortie de l'embrayage couple (184b), ledit au moins un élément de transmission de couple (186b) se déplace dans une direction essentiellement radiale.

10. Machine-outil selon l'une des revendications 1 à 9, **caractérisée en ce que** l'outil (40b) est reçu de façon amovible dans un évidement (126b) cylindrique circulaire du porte-outil (118b).

11. Machine-outil selon l'une des revendications 1 à 10, **caractérisée en ce que** ledit au moins un élément de transmission de couple (186b) est reçu dans un évidement (188b) du porte-outil (118b), l'évidement (188b) présentant de préférence au moins une butée intérieure (212b) pour l'élément de transmission de couple (186b).

12. Machine-outil selon l'une des revendications 1 à 11, **caractérisée en ce qu'**au moins trois éléments de transmission de couple (186b) sont disposés de façon régulièrement répartie sur la circonférence du porte-outil (118b).

13. Machine-outil selon l'une des revendications 1 à 12, **caractérisée en ce que** l'ensemble de ressorts comprend une douille de serrage (190b) de préférence essentiellement cylindrique circulaire.

14. Machine-outil selon la revendication 13, **caractérisée en ce que** la douille de serrage (190b) présente une fente (194b) s'étendant de façon continue entre les deux extrémités de douille axiales (196b, 198b).

15. Machine-outil selon la revendication 14, **caractérisée en ce que** la fente (194b) s'étend essentiellement le long d'une hélice.

16. Machine-outil selon la revendication 14 ou 15, **caractérisée en ce que** la fente (194b) s'étend sur un angle circonférentiel qui s'élève à un multiple entier de 360°.

17. Machine-outil selon l'une des revendications 13 à 16, **caractérisée en ce que** le couple transmissible maximal est réglable par une sélection adéquate de l'épaisseur de paroi ou/et du matériau de la douille de serrage (190b).

18. Machine-outil selon l'une des revendications 13 à 17, **caractérisée en ce que** la douille de serrage (190b) est bloquée sur le porte-outil (118b) au moyen d'une douille de blocage (136b).

19. Machine-outil selon la revendication 18, **caractérisée en ce que** la douille de blocage (136b) bloque l'outil (40b) axialement dans le porte-outil (118b).

20. Machine-outil selon la revendication 18 ou 19, **caractérisée en ce que** la douille de blocage (136b) sur le porte-outil (118b) est disposée de façon mobile entre une position de blocage d'outil et une position de déblocage d'outil.

21. Machine-outil selon la revendication 20, **caractérisée en ce que** des éléments de blocage (130b) sont affectés à la douille de blocage (136b), ces éléments traversant des perçages (132b) du porte-outil (118b) et s'engageant dans la position de blocage d'outil dans une rainure de maintien (134b) prévue sur la circonférence extérieure de l'outil (40b).
